# FASCICULE DE BREVET EUROPEEN

(11) **EP 3 408 721 B1**
(45) Date de publication et mention de la délivrance du brevet: **05.02.2020**
(21) Numéro de dépôt: 17706580.2
(22) Date de dépôt: 27.01.2017
(51) Int. Cl.: G05D 1/02, B60W 30/095, B60W 30/16, E01C 1/00

(54) **SYSTÈME DE TRANSPORT AUTOMATIQUE**
AUTOMATISCHES TRANSPORTSYSTEM
AUTOMATIC TRANSPORT SYSTEM

(30) Priorité: 29.01.2016 FR 1600155
(43) Date de publication de la demande: 05.12.2018
(73) Titulaire: Moulene, Daniel, 78670 Vilennes Sur Seine (FR)
(72) Inventeur: Moulene, Daniel, 78670 Vilennes Sur Seine (FR)
(74) Mandataire: Loyer & Abello
(86) Numéro de dépôt international: PCT/FR2017/050192
(87) Numéro de publication internationale: WO 2017/129918

(56) Documents cités:
- WO-A2-2009/106920
- WO-A2-2013/003387
- US-A- 6 012 396

## Description

### Domaine technique

L'invention se rapporte au domaine technique du transport.

### Arrière-plan technologique

De nombreuses études ont montré ces dernières années la faisabilité de la conduite automatique sans conducteur de véhicules et en particulier de véhicules automobiles.

Cependant, on se heurte actuellement à l'implantation grandeur nature et dans les conditions normales de déplacements des voitures de cette technologie, car il est extrêmement difficile de faire fonctionner des véhicules dans l'environnement réel tels que les autoroutes, les routes, les rues etc., du fait des éléments très divers qui peuvent y circuler tels que des camions, des bus, d'autres voitures, des motos, des scooters, des cycles, des piétons et des animaux. Du fait de cette hétérogénéité des intervenants, il n'est pas prévu une automatisation globale des automobiles c'est-à-dire sans le contrôle d'un conducteur et sur route ouverte, avant les années 2030 voire 2035, au niveau 5 de l'échelle de OICA (Organisation Internationale des Constructeurs automobiles).

Par contre, la conduite sans conducteur d'un véhicule type automobile, c'est-à-dire 3 ou 4 roues (ou plus), stable, dans des conditions d'environnement contrôlés en particulier sur route non ouverte, même à des vitesses de plus de 120 km/h est déjà possible.

D'autre part, la qualité des transports en commun n'est souvent pas satisfaisante en termes de cadence, en termes de durée de trajet et en termes d'adéquation de l'offre à la demande avec par exemple, la nuit des véhicules vides et en période de pointe, des véhicules bondés et des durées de transport excessives.

Pour résoudre le problème des transports collectifs, il est proposé de nombreuses solutions utilisant des nacelles guidées par un rail suspendu et posé sur des pylônes comme par exemple le brevet WO 2013/003387 de Skytran ou le projet SMT Rail. Mais ces solutions ne font qu'ajouter un nouveau mode de transport non compatible avec les types de transports de voyageurs existants (automobiles, bus, tramways, métro, trains ...)

Pour améliorer le transport de voyageurs à la demande en utilisant des véhicules automatiques sans conducteur, la demande de brevet WO2009/106920 de Sitar propose une méthode de guidage automatique de véhicules motorisés sur route et un système de transport automatique utilisant des guides optiques sur la route, lus par les véhicules. Cependant, ce document prévoit des voies avec intersections, et même avec des stops, ce qui ne permet pas une circulation fluide et rapide.

La congestion des voies de circulation dédiées aux automobiles est souvent importante et ralentit aussi les transports en commun terrestres tels que les bus ou les tramways. Il est donc souvent proposé de réserver des voies entières de circulation à ces véhicules de transport en commun. Cependant, même s'ils sont souvent prioritaires aux carrefours, du fait qu'ils s'arrêtent fréquemment aux stations et aux croisements, leur vitesse moyenne (vitesse commerciale) est très faible, aux environs de 20 km/h voire moins, malgré leurs voies réservées (dites en site propre, c'est-à-dire site personnel).

De plus, la réservation de ces voies de circulation à une certaine catégorie de véhicules augmente la congestion des voies de circulation restantes.

De fait, il existe de réels besoins pour d'une part utiliser le plus tôt possible des véhicules automatisés sans contrôle d'un conducteur, en particulier pour réduire le taux d'accidentologie et pour d'autre part disposer de moyens de transport publics ou collectifs de voyageurs, performants

US6092396 divulgue un système de transport comportant une pluralité de véhicules qui sont chacun aptes à fonctionner soit sur une route soit sur une infrastructure ferroviaire. Les véhicules sont susceptibles d'être contrôlés à distance par un dispositif de contrôle à distance lorsqu'ils sont sur les rails. Ce document prévoit un appareil de contrôle qui contrôle à distance chaque véhicule et permet de délivrer une consigne de vitesse. Cependant, dans ce système, les véhicules nécessitent des mécanismes couteux de basculement des roues, et des roues dédiées aux rails en plus des roues à pneus, ainsi que des rails avec des aiguillages.

### Résumé

L'invention vise à résoudre les problèmes précités en proposant un système de transport combinant à la fois le transport de personnes dans des véhicules automobiles et le transport de voyageurs dans des navettes de transport collectif, satisfaisant à des exigences de sécurité et garantissant des vitesses de déplacement optimales.

Pour ce faire, selon un mode de réalisation, l'invention propose un système de transport comportant :
- des véhicules qui sont chacun équipés de pneumatiques, d'au moins un moteur électrique et d'une réserve d'énergie interne qui participent au moins partiellement à la propulsion dudit véhicule, de capteurs embarqués et de roues directrices, lesdits véhicules étant d'une part des véhicules automobiles aptes à fonctionner dans un mode automatique dans lequel le conducteur n'intervient pas sur le pilotage du véhicule automobile, et d'autre part des navettes de transport collectif de voyageurs aptes à fonctionner automatiquement sans conducteur, lesdits véhicules étant aptes à se guider à l'aide des capteurs embarqués et des roues directrices ;
- une pluralité de voies de circulation rapide à sens unique comportant au moins une voie de circulation par sens de circulation, lesdites voies de circulation rapide étant chacune dépourvues d'intersection, dépourvues de croisement, dépourvues de point d'arrêt, et étant construites au même niveau ou à des niveaux différents sur des pylônes et/ou dans des tunnels ;
- une pluralité de voies de desserte permettant l'accès desdits véhicules aux voies de circulation rapide et reliant lesdites voies de circulation rapide à des zones d'entrée pour les véhicules automobiles, à des zones de sortie pour les véhicules automobiles et à des stations pour les navettes de transport collectif ;
- les voies de circulation rapide et lesdites voies de desserte étant limitées de chaque côté par des montants; lesdites voies de circulation rapide et de déserte ne comportant pas de montant entre les voies dans chaque emplacement dédié à un changement de voies,
- les zones d'entrée pour les véhicules automobiles comportant des voies d'entrée qui sont chacune reliées à au moins une voie de circulation rapide par une voie de desserte ; chaque voie d'entrée comportant un dispositif de contrôle d'accès configuré pour :
   - déterminer au moins une caractéristique spécifique d'un véhicule automobile entrant choisie parmi un certificat d'accès, une information d'homologation, des dimensions, le poids, l'autonomie d'énergie et l'état de santé dudit véhicule automobile entrant ;
   - comparer ladite au moins une caractéristique spécifique contrôlée avec une directive ;
   - autoriser ou refuser l'accès du véhicule automobile aux voies de circulation rapide en fonction de ladite comparaison ; et
   - imposer un fonctionnement en mode automatique d'un véhicule automobile entrant autorisé à accéder et transmettre audit véhicule automobile entrant un signal de verrouillage du mode automatique ; lesdits véhicules automobiles étant agencés pour, en réponse à la réception dudit signal de verrouillage du mode automatique, rendre inopérant pour le conducteur les commandes de direction, d'accélération, de freinage, de sélection de vitesses, de mise en route et d'arrêt du véhicule automobile;
- les zones de sortie pour véhicules automobiles étant reliées aux voies de circulation rapide par des voies de desserte et comportant des voies de sortie, chaque voie de sortie comportant un dispositif de sortie configuré pour transmettre à chaque véhicule automobile sortant un signal de déverrouillage du mode automatique ; lesdits véhicules automobiles étant agencés pour, en réponse à la réception dudit signal de verrouillage du mode automatique, rendre opérant pour le conducteur les commandes de direction, d'accélération, de freinage, de sélection de vitesses, de mise en route et d'arrêt du véhicule automobile et permettant audit conducteur de reprendre le contrôle du déplacement de son véhicule ;
- les stations pour les navettes de transport collectif comportant chacune un quai permettant à des voyageurs d'entrer ou de sortir de l'une des navettes de transport collectif, lesdites stations pour les navettes de transport collectif étant chacune reliées à au moins une voie de circulation par au moins deux voies de desserte respectivement de départ et d'arrivée ;
- un dispositif de gestion du trafic configuré pour délivrer à chaque véhicule circulant sur les voies de circulation rapide et de desserte du système de transport des consignes de vitesse en fonction de la voie de circulation rapide ou de desserte sur laquelle ledit véhicule circule et en fonction d'informations représentatives du nombre, de la position géographique et des vitesses des autres véhicules circulant sur lesdites voies.

Un tel système de transport est particulièrement avantageux en ce que compte-tenu du fonctionnement en mode automatique des véhicules, il est possible de maintenir des distances inter-véhicule stables, ce qui évite les phénomènes d'embouteillages et permet par conséquent d'atteindre d'important flux de voyageurs.

En outre, le fait de ne pas avoir à s'occuper de la conduite procure un avantage appréciable en termes de confort et permet de diminuer considérablement les risques d'accidents.

Par ailleurs, un tel système de transport est particulièrement efficient d'un point de vue environnemental compte-tenu du faible impact des voies sur pylônes, de la réduction de l'emprise au sol, de l'absence ou de la faible pollution atmosphérique, de la réduction du bruit, de la moindre consommation énergétique.

Selon d'autres modes de réalisation avantageux, un tel système de transport peut présenter une ou plusieurs des caractéristiques suivantes.

Selon un mode de réalisation, le système de transport comporte en outre un dispositif de gestion des déplacements des véhicules automobiles qui est configuré pour :
- recevoir une requête comprenant une information d'identification associée à un véhicule automobile, une information temporelle de départ et une information représentative d'un trajet de l'une des zones d'entrée jusqu'à l'une des zones de sortie;
- déterminer une variable représentative d'une estimation de trafic sur les voies concernées par ladite requête en fonction de ladite information temporelle de départ et de ladite information représentative d'un trajet ;
- comparer la variable représentative d'une estimation de trafic à une valeur seuil ; et
- délivrer au véhicule automobile associé à l'information d'identification un certificat d'accès lorsque la variable représentative d'une estimation de trafic est inférieure à ladite valeur seuil ;
chaque dispositif de contrôle d'accès étant configuré pour déterminer si un véhicule automobile est associé à un certificat d'accès et à autoriser l'accès audit véhicule automobile lorsqu'il est associé à un certificat d'accès.

Selon un mode de réalisation, le système de transport comporte en outre un dispositif de gestion des déplacements des voyageurs configuré pour :
- recevoir une requête d'un voyageur comprenant une information temporelle, une information représentative d'un trajet d'une station pour navettes de transport collectif de départ jusqu'à une station de navettes de transport collectif d'arrivée ;
- délivrer au voyageur en réponse à ladite requête, une information personnelle relative à une heure de départ d'une navette de transport collectif et une information personnelle relative à une position de ladite navette de transport collectif sur le quai de la station pour navettes de transport collectif de départ.

Selon un mode de réalisation, le dispositif de gestion des déplacements des voyageurs est en outre configuré pour déterminer un trajet d'une navette de transport collectif en fonction d'une pluralité de requêtes de voyageurs reçues de manière à optimiser le remplissage de ladite navette de transport collectif.

Selon un mode de réalisation, le système de transport comporte pour chaque sens de circulation, plusieurs voies de circulation rapide, le dispositif de gestion du trafic étant configuré pour attribuer des consignes de vitesses plus rapides ou plus lentes aux véhicules selon qu'ils circulent sur une première et une deuxième desdites voies de circulation rapide d'un même sens de circulation.

Selon un mode de réalisation, le dispositif de contrôle d'accès comporte des moyens complémentaires de contrôle dynamique du véhicule entrant, qui sont configurés pour :
- déterminer au moins une caractéristique représentative du comportement dynamique d'un véhicule, choisi parmi la qualité des trajectoires, la vitesse par rapport à une vitesse de consigne, les capacités d'accélération et de décélération du véhicule entrant ;
- comparer ladite caractéristique représentative du comportement dynamique du véhicule entrant contrôlée à une directive ; et
- autoriser ou refuser l'accès du véhicule automobile en fonction de ladite comparaison.

Selon un mode de réalisation, le quai d'au moins l'une des stations pour les navettes de transport collectif comporte de portes palières , des détecteurs de présence aptes à détecter la présence d'une navette de transport collectif devant chacune des portes palières et des moyens de commande des portes palières aptes à déclencher l'ouverture de l'une des portes palières en réponse à la détection d'une navette de transport devant ladite porte palière.

Selon un mode de réalisation, le système de transport comporte en outre des moyens aptes à délivrer un signal d'avertissement de la présence d'au moins un voyageur devant l'une des portes palières, lesdits moyens de commande des portes palières étant aptes à déclencher l'ouverture de l'une des portes palières en réponse à la réception d'un signal d'avertissement. Selon un mode de réalisation, les moyens aptes à délivrer un signal d'avertissement peuvent notamment comprendre un bouton, une caméra associée à des moyens de reconnaissance vidéo et/ou un détecteur RFID.

Selon un mode de réalisation, les zones d'entrée, les zones de sortie et/ou les stations pour les navettes de transport collectif comportent des zones de stationnement équipées d'un dispositif de recharge d'énergie ou d'un dispositif d'échange de batterie. Le dispositif de recharge d'énergie peut notamment être un chargeur électrique à induction ou une réserve d'hydrogène.

Selon un mode de réalisation, les voies de circulation rapide sont portées par des pylônes au moyen de poutres en béton, les montants fixant les poutres entre elles, servant de guide pour le déplacement des véhicules et de mur antibruit.

Selon un mode de réalisation, les voies de circulation rapide, de déserte, d'entrée et de sortie comportent des bandes de roulement en béton lavé.

Selon un mode de réalisation les voies de circulation rapide, de déserte, d'entrée et de sortie comportent des bandes de roulement qui sont séparées par un espace qui permet aux eaux de ruissellement et autres salissures de s'évacuer.

Selon un mode de réalisation, le système de transport comporte un tunnel présentant un diamètre intérieur de l'ordre de 7.5 m traversé par un premier ensemble de deux voies pour l'une des directions et un deuxième ensemble de deux voies pour l'autre des directions, ledit deuxième ensemble étant disposé au-dessus ou en dessous du premier ensemble; chacun des premier et deuxième ensemble de deux voies comportant deux voies de circulation rapide ou une voie de circulation rapide et une voie de desserte.

Selon un mode de réalisation, le système de transport comporte un tunnel présentant un diamètre intérieur de l'ordre de 9.5 m traversé par un premier ensemble de trois voies pour l'une des directions et un deuxième ensemble de trois voies pour l'autre des directions, ledit deuxième ensemble étant disposé au-dessus ou en dessous du premier ensemble ; chacun des premier et deuxième ensemble de trois voies comportant trois voies de circulation rapide ou deux voies de circulation rapide et une voie de desserte.

Selon un mode de réalisation, les montants servent de guidage et les capteurs embarqués sont des radars à ultrasons positionnés à l'avant, à l'arrière et sur les côtés des véhicules et aptes à détecter lesdits montants.

Selon un mode de réalisation, les véhicules sont chacun équipés d'un dispositif de pilotage qui comporte un module de changement de voies entre une voie d'origine et une voie cible, ledit module de changement de voies étant relié auxdits capteurs embarqués et étant configuré pour:
- détecter un indicateur de changement de voie constitué par une discontinuité du montant séparant la voie d'origine de la voie cible ou par un indicateur optique ; ou
- traiter une information représentative d'un changement de voie délivrée par le dispositif de gestion du trafic ou stockée dans une mémoire du véhicule ;
- détecter la position de l'un des montants de la voie cible ; et
- piloter ledit véhicule de manière à ce qu'il se déporte de la voie d'origine vers la voie cible en fonction de l'indicateur de changement de voie ou de l'information représentative d'un changement de voie et de la position de l'un des montants de la voie cible.

Selon un mode de réalisation, un écartement entre les deux montants de l'une des voies de circulation rapide, de déserte, d'entrée et de sortie dans une zone de virage est supérieur à un écartement entre les deux montants de ladite voie dans une zone de ligne droite.

Selon un mode de réalisation, au moins l'un des véhicules comporte au moins quatre roues équipées chacune d'un moteur intégré qui remplace le moteur et pouvant chacune tourner pour assurer la direction du véhicule.

Selon un mode de réalisation, au moins l'une des voies est équipée d'un dispositif de charge par induction apte à délivrer un champ magnétique et dans lequel au moins l'un des véhicules automobiles ou l'une des navettes de transport collectif est équipé d'un récepteur apte à transformer le champ magnétique en un courant électrique afin de recharger une batterie.

Selon un mode de réalisation, le dispositif de gestion des déplacements des voyageurs est configuré en outre pour que des navettes de transport collectif présélectionnées s'arrêtent à certaines stations, à horaires prédéterminés et pour des trajets prédéterminés, pour prendre les passagers qui le souhaitent et déposer ceux qui souhaitent en sortir, selon un transport cadencé.

Selon un mode de réalisation, le système de transport comporte des stations construites au niveau du sol, ne nécessitant pas d'escalier pour être utilisées par les voyageurs et comportant des voies de desserte sous forme de rampes d'accès pour relier les voies de circulation rapide.

Selon un mode de réalisation, les voies de desserte comportent des zones dédiées à l'accélération des véhicules et des zones dédiées à la décélération des véhicules.

Selon un mode de réalisation, les véhicules sont équipés de caméra vidéo dont les images sont retransmises au dispositif de gestion du trafic, ledit dispositif de gestion du trafic comportant des moyens d'analyse automatique de ces images aptes à contrôler le bon fonctionnement et à détecter d'éventuelles anomalies.

Selon un mode de réalisation, le système de transport comporte des véhicules équipés de moyens de nettoyage automatique des voies.

Selon un mode de réalisation, le système de transport ne comporte que des véhicules équipés d'un système de mémorisation de données apte à mémoriser les informations nécessaires au fonctionnement desdits véhicules sur lesdites voies, lesdits véhicules étant agencés pour rouler de manière autonome jusqu'à la prochaine voie de sortie ou jusqu'à la prochaine station au moyen desdites informations mémorisées dans le système de mémorisation.

Selon un mode de réalisation, les voies comportent des bandes de roulement en béton fibré.

Selon un mode de réalisation, tous les véhicules automobiles et toutes les navettes de transport collectif sont équipés d'une interface avec le dispositif de gestion du trafic apte à autoriser à un passager de demander un arrêt à la prochaine station ou zone de sortie, par exemple en cas d'urgence.

Selon un mode de réalisation, les stations comportent une zone de garage desdites navettes.

Selon un mode de réalisation, le système de transport comporte un système de reconnaissance devant les portes palières pour détecter qu'il s'agit bien d'un voyageur ayant réservé.

Selon un mode de réalisation, le système de transport comporte des navettes de transport public équipées d'un système de reconnaissance pour détecter quand le voyageur ayant réservé est présent dans la navette et quand il est sorti.

Selon un mode de réalisation, au moins l'une des voies de desserte comporte une partie sous forme de rampes d'accès permettant de relier deux voies de circulation rapide à différents niveaux, une voie de circulation rapide et une station à différents niveaux ou une voie de circulation rapide et une zone d'entrée ou de sortie à différents niveaux.

Selon un mode de réalisation, le système de transport comporte une voie d'embarquement-débarquement longeant le quai de chacune des stations qui est reliée à une voie de desserte

### Brève description des figures

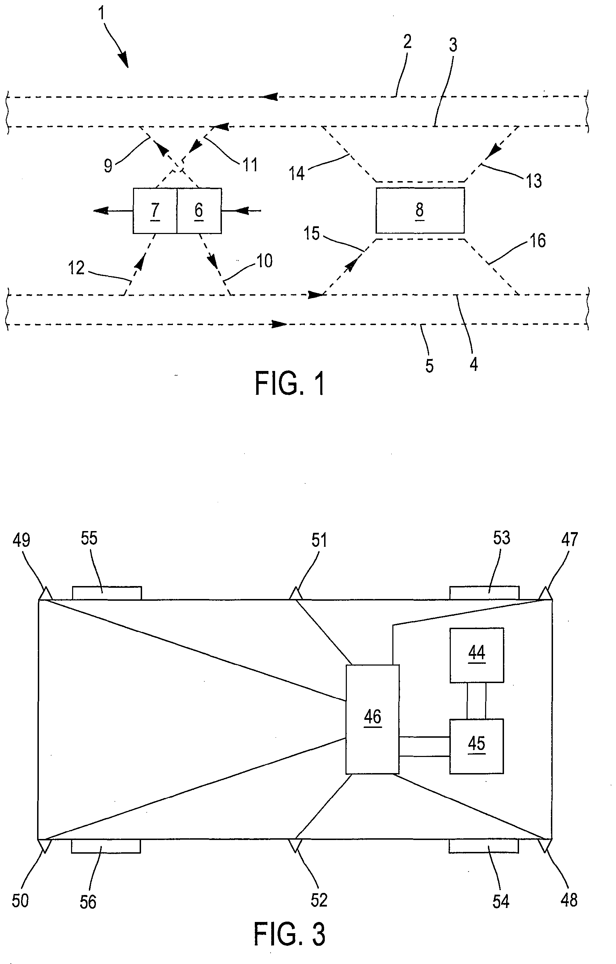

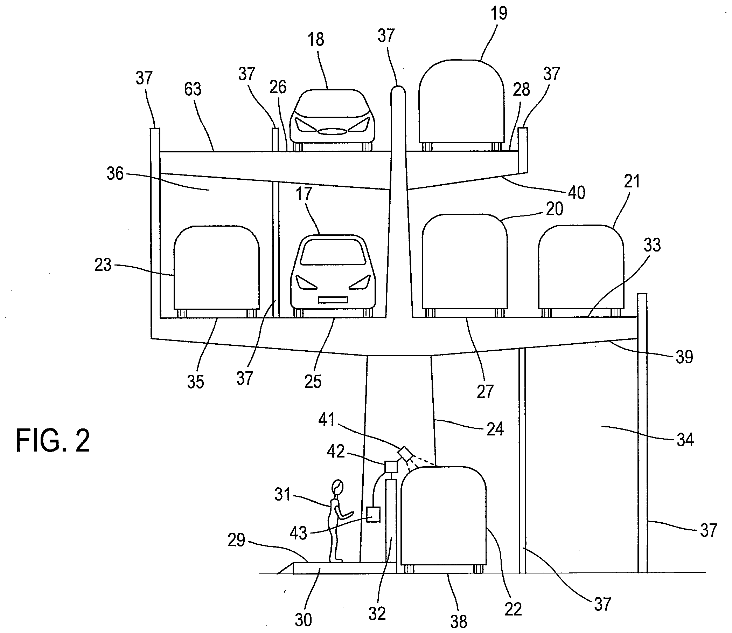

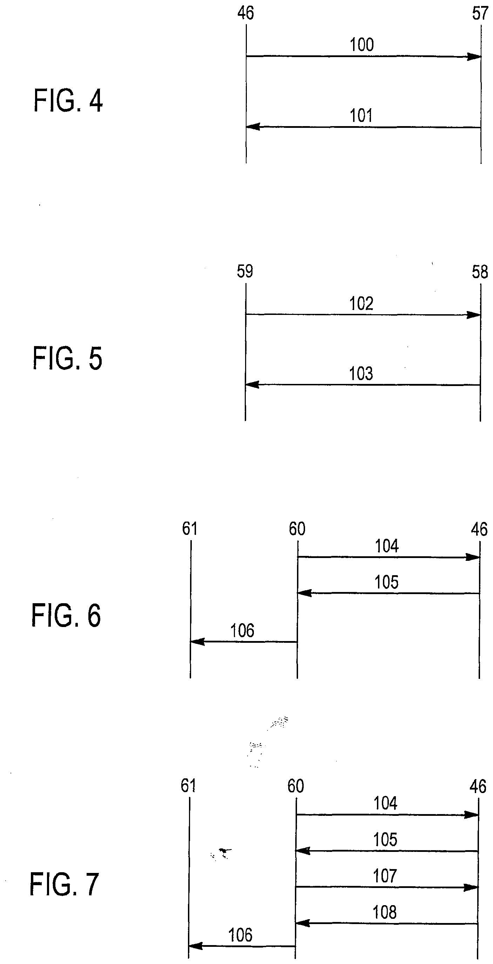

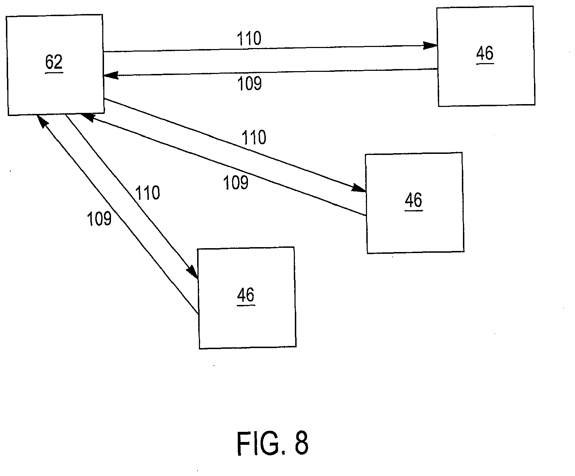

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une représentation fonctionnelle et partielle d'une infrastructure de transport d'un système de transport selon l'invention.
- **La** **figure 2** représente de manière schématique l'infrastructure de transport.
- **La** **figure 3** illustre schématiquement un véhicule du système de transport.
- **La** **figure 4** est un diagramme illustrant schématiquement le fonctionnement du dispositif de gestion des déplacements des véhicules automobiles.
- **La** **figure 5** est un diagramme illustrant schématiquement le fonctionnement du dispositif de gestion des déplacements des voyageurs.
- **La** **figure 6** est un diagramme illustrant le fonctionnement d'un dispositif de contrôle d'accès.
- **La** **figure 7** est un diagramme illustrant le fonctionnement d'un dispositif de contrôle d'accès selon une variante de réalisation.
- **La** **figure 8** Illustre schématiquement le fonctionnement d'un dispositif de gestion du trafic.

### Description détaillée de modes de réalisation

Le système de transport vise à la fois à transporter des personnes dans des véhicules automobiles et dans des navettes de transport collectif. Les véhicules automobiles comme les navettes de transport collectifs du système de transport selon l'invention sont tous aptes à fonctionner dans un mode de fonctionnement automatique, c'est-à-dire sans intervention d'un conducteur.

La figure 1 illustre partiellement et schématiquement l'infrastructure 1 du système de transport 1 selon un mode de réalisation. L'infrastructure 1 comporte ici deux voies de circulation rapide 2, 3, 4, 5 à sens unique pour chacun de deux sens de circulation. Chacune des voies de circulation rapide 2, 3, 4, 5 est dépourvue d'intersection, dépourvue de croisement et dépourvue de point d'arrêt, c'est-à-dire dépourvue notamment de feu tricolore et de panneau de Stop. Les voies de circulation rapide 2, 3, 4, 5 permettent de relier les unes aux autres une pluralité de zones d'entrée 6 et de zones de sortie 7 pour les véhicules automobiles et une pluralité de stations 8 pour les navettes de transport collectif afin de créer un réseau de transport mixte.

Comme représenté sur la figure 1, chaque zone d'entrée 6 est reliée à une voie de circulation rapide 3, 4 par sens de circulation, par une voie de déserte 9, 10 dédiée. De même, chaque zone de sortie 7 est également reliée à une voie de circulation rapide 3, 4 par sens de circulation, par une voie de desserte 11, 12 respective.

En outre, comme représenté sur la figure 1, chaque station 8 pour les navettes de transport collectif est reliée en amont et en aval à une voie de circulation rapide 3, 4 par sens de circulation, au moyen de voies de desserte 13, 14, 15, 16.

Notons que, dans un mode de réalisation non représenté, une ou plusieurs voies de desserte relient chacune une voie de circulation rapide, à la fois à une zone d'entrée ou de sortie pour véhicule automobile et à une station pour les navettes de transport collectif.

La figure 2 représente d'une façon simplifiée une infrastructure selon un mode de réalisation. Les deux types de véhicules envisagés, à savoir des véhicules automobiles 17, 18 et des navettes de transport collectif 19, 20, 21, 22, 23 circulent sur cette infrastructure. Le côté droit de la figure 2 représente le sens de circulation qui s'éloigne, alors que le côté gauche représente le sens de circulation qui se rapproche.

Comme représenté sur la figure 2, le système de transport comporte des pylônes 24 qui supportent les voies de circulation rapide 25, 26, 27, 28. En outre, les voies de circulation rapide 25, 26, 27, 28 sont superposées sur au moins deux niveaux, les unes au-dessus des autres. A titre d'exemple, les voies de circulation rapide 26, 28 disposées au niveau supérieur sont destinées à recevoir des véhicules 18, 19 circulant aux vitesses les plus rapides tandis que les voies de circulation rapide 25, 27 qui sont disposées au niveau intermédiaire sont destinées à recevoir des véhicules 17, 20 circulant à des vitesses moindres.

La figure 2 représente également une station 29 pour les navettes de transport collectif qui est disposée au niveau du sol. Ainsi, dans cet exemple, la station 29 n'a pas besoin de toit supplémentaire puisqu'elle se trouve sous les voies de circulation rapide 25, 26, 27, 28 du système de transport. Cette station 29 comporte un quai 30 apte à recevoir des voyageurs 31. Ainsi, la station 29 ne nécessite pas d'escaliers pour permettre aux voyageurs 31 d'accéder au quai 30. Le quai 30 est avantageusement équipé d'une ou de plusieurs portes palières 32.

Afin de permettre aux navettes de transport collectif 19, 20, 21, 22, 23 circulant sur les voies de circulation rapide 25, 26, 27, 28 d'accéder à la station 29, le système de transport comporte des voies de desserte dont une partie est réalisée sous forme de rampe d'accès. Par exemple, sur la figure 2, la voie de desserte 33 se prolonge par une partie en rampe d'accès 34 de manière à permettre à la navette de transport collectif 21 de rejoindre la station 29 au sol, en tournant vers la voie d'embarquement-débarquement 38 longeant le quai 30. Les navettes de transport collectif peuvent ainsi venir se placer, tel que la navette de transport collectif 22, devant une porte palière 32 de la station 29. Le système de transport comporte également des voies de desserte, tel que la voie de desserte 35, dont une partie réalisée sous forme de rampe d'accès 36 permet d'accéder au niveau supérieur, et plus particulièrement à une voie de desserte pouvant accéder à une voie de circulation rapide 26 du niveau supérieur à partir d'une voie de circulation rapide 25 d'un niveau inférieur, voire directement à partir d'une zone d'entrée ou d'une station 29. Les parties de voies de desserte en rampes d'accès 34 et 36 sont très schématisées pour ne pas compliquer la figure 2.

Bien que la figure 2 ne représente pas de zones d'entrée et de zones de sortie pour les véhicules automobiles, lesdites zones d'entrée sont disposées au niveau du sol, en dessous des voies de circulation rapide 25, 26, 27, 28 et reliées chacune à une ou plusieurs voies de circulations rapide par une ou plusieurs voies de desserte comportant chacune une partie en rampe d'accès.

Toutefois, dans d'autres modes de réalisation, les zones d'entrées et de sorties des véhicules peuvent être agencées différemment, notamment en étant davantage éloignées des voies de circulation rapide 25, 26, 27, 28 du système de transport, en particulier dans le cas de manque d'espace ou pour connecter le système de transport à des voies de grande circulation, ou à un parking.

En outre, selon un mode de réalisation, les véhicules automobiles sont susceptibles de servir au transport de marchandises. Aussi, le système de transport peut être équipé de zones d'entrée et de sortie dédiées au transport de marchandise, pour la pose et la dépose des marchandises ou la reprise du véhicule automobile par un chauffeur qui effectue la livraison finale.

Les voies de circulation rapide 25, 26, 27, 28 et les voies de desserte33, 35 sont chacune limitées, de chaque côté, par des montants 37. A titre d'exemple, les montants 37 font saillie d'une hauteur d'environ 50 cm au-dessus des voies de circulation rapide 25, 26, 27, 28 et de desserte 34, 35. Les voies de circulation rapide 25, 26, 27, 28 et les voies de desserte 33 sont toutefois dépourvues de tels montants 37, entre deux voies adjacentes au niveau de chaque zone dédiée à un changement de voies entre les deux voies adjacentes. Une telle zone dédiée à un changement de voie est représentée entre la voie de circulation rapide 27 et la voie de desserte 33 sur la figure 2.

Par ailleurs, si aucune passerelle de sauvegarde n'a été représentée sur la figure 2 pour ne pas l'alourdir, le système de transport peut comporter des passerelles de sauvegarde visant à être utilisées en cas de défaillance des véhicules. Celles-ci sont de préférence ménagées entre les montants de deux voies de circulation rapide adjacentes, de préférence du côté de l'ouverture des portes des navettes de transport collectif des voyageurs, lorsque celles-ci ne comportent des portes que d'un seul côté

Selon un exemple de réalisation, les bandes de roulements des voies de circulation rapide 25, 26, 27, 28 et des voies de desserte 33, sont réalisées en béton lavé. Le béton lavé est avantageux en ce que le bruit de roulement ainsi que les caractéristiques d'adhérence d'une bande de roulement en béton lavé sont équivalents à ceux d'une bande de roulement en asphalte, tandis que sa durée de vie est de trente ans, soit six fois supérieure à celle en asphalte. En outre, les bandes de roulement des voies de circulation rapide 25, 26, 27, 28 et des voies de desserte 33, 34 sont séparées les unes des autres par un espace qui permet aux eaux de ruissellement et autres salissures de s'évacuer automatiquement, sans avoir besoin d'un matériau poreux pour la bande de roulement. Ceci est particulièrement avantageux lorsque les bandes de roulements sont en béton lavé.

Selon une variante de réalisation, le béton lavé est remplacé par du béton fibré en particulier par du béton fibré à haute performance, qui participe à la résistance de l'infrastructure.

Les voies de circulation rapide 25, 26, 27, 28 et les voies de desserte 33, 34 sont supportées par les pylônes 24 au moyen de poutres transversales 39, 40, par exemple en béton. Dans un mode de réalisation avantageux, les montants 37 assurent également une liaison des poutres transversales 39, 40 d'un même niveau entre elles. Comme nous les verrons par la suite, les montants 37 sont également aptes à servir au guidage des véhicules le long des voies de circulation rapide 25, 26, 27, 28 et des voies de desserte 33, 34 et/ou à servir de murs antibruit.

Les poutres transversales 39, 40 et les pylônes 24 du système de transport peuvent être préfabriqués en usine, acheminés par route relativement facilement, puis installés sur les sites avec des moyens de manutention de dimensions raisonnables.

Bien entendu, dans les tronçons où il n'y a ni station ni zone d'entrée ou de sortie, le système de transport est plus simple puisqu'il ne comprend que quatre voies de circulation rapide 25, 26, 27, 28, une voie 26, 28 plus rapide par sens de circulation au niveau supérieur et une voie moins rapide 25, 27 par sens de circulation au niveau intermédiaire. Les voies de circulation rapide 25, 26, 27, 28 sont alors supportées par des poutres transversales 39, 40 d'une longueur moindre. En outre, il n'y a dans ce cas rien au sol, que la base des pylônes 24.

Il faut noter que la figure 2 représente un exemple de réalisation du système de transport selon l'invention qui, malgré sa simplicité, permet une capacité potentielle de 40 000 voyageurs par heure par sens de circulation, comme cela est expliqué un peu plus loin, ce qui correspond à la capacité d'un métro automatique de dernière génération.

Dans un mode de réalisation simplifié du système de transport, celui-ci ne comporte qu'une voie de circulation rapide par sens de circulation. Ainsi, le système de transport ne comporte qu'un niveau de voies de circulation rapide qui est supporté par les pylônes 34 au moyen de poutres, présentant une longueur moindre.

Dans un autre mode de réalisation simplifié, le système de transport ne comporte, au moins localement, qu'un seul sens de circulation et qu'une seule voie de circulation rapide, en particulier pour des rues qui ne sont pas assez larges pour recevoir plusieurs sens de circulation.

Comme mentionné précédemment, les stations 29 sont de préférence au niveau du sol, pour éviter les escaliers et améliorer ainsi l'accès des piétons. Aussi, comme expliqué précédemment, ce sont donc les navettes de transport collectif qui rejoignent les stations 29. Pour réduire l'emprise au sol, les deux quais 30 d'une station 29 correspondant respectivement à l'une et à l'autre des deux directions peuvent ne pas être en face l'un de l'autre, mais décalés l'un de l'autre.

Chaque quai 30 est préférentiellement équipé de portes palières 32 automatisées qui lorsqu'elles sont ouvertes permettant aux voyageurs 31 de passer du quai 30 à l'une des navettes de transport collectif de voyageur, et vice versa. Les petites stations ne comportent que deux ou trois portes palières 32 par sens de circulation alors que les grandes stations peuvent en comporter quinze ou vingt voire plus, en fonction du débit souhaité.

Les portes palières automatisées, bénéficient de l'expérience très positive des métros automatiques et de son acceptation par les usagers.

Selon un mode de réalisation préféré, les portes palières 32 sont associées à des détecteurs de présence 41 aptes à détecter la présence d'une navette de transport collectif devant chacune des portes palières 32 et à des moyens de commande automatique des portes palières 32 qui sont aptes à déclencher l'ouverture de l'une des portes palières 32 en réponse à la détection d'une navette de transport devant ladite porte palière 32. A titre d'exemple, les détecteurs de présence 41 sont des détecteurs à ultrasons ou des caméras vidéo associés à des moyens de traitement des signaux vidéo.

Par ailleurs, selon une variante de réalisation, les portes palières 32 sont également associées à des moyens d'avertissement 43 aptes à délivrer aux moyens de commande automatique des portes palières 42 un signal d'avertissement lorsqu'au moins un voyageur 31 se situe devant l'une des portes palières 32. Les moyens d'avertissement 43 peuvent notamment comprendre un bouton poussoir, une caméra associée à des moyens de reconnaissance vidéo et/ou un détecteur RFID. Selon une variante de réalisation, pour détecter qu'il s'agit bien d'un voyageur ayant réservé un trajet dans ladite navette, un système de reconnaissance peut être utilisé, tel qu'une interface électronique permettant au voyageur de saisir un identifiant ou une borne ou un panneau avec détection RFID, NFC, par reconnaissance digitale, reconnaissance faciale ou reconnaissance de pupille.

Selon une variante de réalisation, les navettes de transport collectif disposent de moyens de reconnaissance, analogues pour détecter la présence dans la navette du voyageur ayant réservé, une fois entré et dès sa sortie.

De telles stations 29 sont aptes à traiter d'importants flux de voyageurs. A titre d'exemple, les navettes de transport collectif pourront se présenter toutes les 60 secondes, soit 60 véhicules par heure par porte palière et 480 voyageurs par heure pour des navettes de transport collectif ayant une capacité moyenne de huit voyageurs. Ainsi, pour un quai 30 comportant 25 portes palières pour une longueur de 150 mètres environ, la capacité maximale de la station est de l'ordre de 12 000 voyageurs par heure.

Dans une version préférée du système de transport, les navettes de transport collectif 19, 20, 21, 22, 23 viennent se positionner devant une porte palière 32, après avoir quitté la voie de desserte 34 pour libérer la voie de desserte durant l'embarquement-débarquement et ne pas gêner les autres véhicules se rendant ou venant d'une autre porte palière 32. Suivant une version préférée, les navettes de transport collectif 19, 20, 21, 22, 23 sont équipées de quatre roues directrices, ce qui permet d'améliorer leur manœuvrabilité et, par conséquent, d'optimiser la distance entre deux portes palières 32.

De plus, de manière avantageuse, au moins certaines stations 29 sont équipées de voies de demi-tour autorisant les navettes de transport collectif 19, 20, 21, 22, 23 ayant déposés tous leurs voyageurs à repartir dans l'autre sens en changeant de voie.

Selon une autre variante de réalisation, les navettes de transport collectif de voyageurs 19, 20, 21, 22, 23 sont susceptibles de fonctionner de manière équivalente en marche avant ou en marche arrière. Dans ce cas, les navettes de transport collectif de voyageurs 19, 20, 21, 22, 23 sont équipées d'une porte de chaque côté et de quatre roues directrices. En outre, les stations sont simplement équipées de zones de garage permettant aux navettes de transport collectif 19, 20, 21, 22, 23 de stationner en attendant de repartir dans l'autre sens. De manière avantageuse, ces zones de garage sont équipées d'un dispositif de recharge d'énergie ou d'un dispositif d'échange de batterie. Le dispositif de recharge d'énergie peut notamment être un chargeur électrique à induction ou une réserve d'hydrogène.

Les voies de demi-tour présentent l'inconvénient d'être plus encombrantes mais offrent l'avantage d'être « FIFO », c'est-à-dire que la navette de transport collectif première arrivée est la première à repartir, ce qui optimise la durée de recharge éventuelle en énergie.

En relation avec la figure 3, l'on décrit la structure générale d'un véhicule du système de transport, que cela soit une navette de transport collectif 19, 20, 21, 22, 23 ou un véhicule automobile 17, 18. Chaque véhicule comporte quatre roues 53, 54, 55, 56 équipées de pneumatiques, ce qui permet de réduire le bruit de roulement, intérieur et extérieur et disposer du meilleur confort. Au moins deux 53 54 desdites roues sont directrices. Chaque véhicule comporte au moins un moteur électrique 44 destiné à assurer au moins partiellement, voire intégralement, la propulsion dudit véhicule. Chaque véhicule comporte également une batterie électrique 45 destinée à assurer l'alimentation du moteur électrique 44 au moins partiellement.

Chaque véhicule comporte également une unité centrale 46 comportant un processeur, ainsi qu'une mémoire et des moyens de communications, par exemple par transmission radio, permettant à l'unité centrale 46 de communiquer avec des équipements du système de transport, détaillés par la suite.

Par ailleurs, chaque véhicule comportent des capteurs embarqués 47, 48, 49, 50, 51, 52. L'unité centrale 46 comporte un dispositif de pilotage qui est configuré pour piloter ledit véhicule en fonction des signaux délivrés par lesdits capteurs 47, 48, 49, 50, 51, 52. Le dispositif de pilotage présente au moins un mode de fonctionnement automatique dans lequel ledit dispositif de pilotage assure le guidage du véhicule, sans intervention d'un conducteur, au moyen des roues directrices 53, 54 et des capteurs embarqués 47, 48, 49, 50, 51, 52.

Selon une version préférée de l'invention, les capteurs embarqués 47, 48, 49, 50, 51, 52 sont des radars à ultrasons positionnés sur les côtés des véhicules, à l'avant, à l'arrière et si nécessaire au centre, en redondance. Les radars à ultrasons sont ainsi aptes à détecter les guides des voies, c'est-à-dire les montants 37 positionnés de part et d'autres des voies de circulation et de desserte. Grâce aux signaux délivrés par de tels capteurs embarqués 47, 48, 49, 50, 51, 52, le dispositif de pilotage est apte à positionner le véhicule au centre des voies de circulation et des voies de desserte en se positionnant à égale distance des montants 37.

Notons que dans un mode de réalisation, afin de prendre en considération l'augmentation des incertitudes de positionnement des véhicules sur les voies dans les zones de virages ou lorsque la vitesse est plus importante ainsi que l'augmentation des risques associés à une incertitude de positionnement des véhicules dans de telles circonstances, l'écartement entre les montants 37 formant guide est plus important dans les zones de virages que dans les lignes droites et est plus important sur une voie que sur une autre lorsque ladite voie est destinée à être parcourue à une vitesse maximale supérieure à celle de l'autre voie.

Par ailleurs, selon un mode de réalisation, les capteurs embarqués 47, 48, 49, 50, 51, 52 précités sont complétés par d'autres capteurs positionnés à l'avant et à l'arrière du véhicule, ces capteurs étant par exemple des caméras vidéo, des caméras infra rouge, des lidars qui permettent de déterminer le positionnement du véhicule par rapport aux bordures des voies et permettent en outre de détecter des obstacles, tels que d'autres véhicules, à l'avant et à l'arrière du véhicule. Ainsi, grâce aux signaux délivrés par des tels capteurs, le dispositif de pilotage est apte à anticiper un freinage automatique d'urgence et à permettre au véhicule de s'insérer à l'intérieur d'un flux de véhicules lorsqu'il change de voie.

Par ailleurs, le dispositif de pilotage comporte un module de changement de voies entre une voie d'origine et une voie cible. Le module de changement de voie est configuré pour détecter la présence d'une zone autorisant un changement de voie. Pour ce faire, selon une première variante de réalisation, le module de changement de voies est configuré pour détecter un indicateur de changement de voie, celui-ci étant par exemple constitué par une discontinuité du montant 37 séparant la voie d'origine de la voie cible ou par un indicateur optique dédié. Selon une deuxième variante de réalisation, le module de changement de voies est susceptible de traiter une information représentative d'un changement de voie qui est, soit délivré par un dispositif de gestion du trafic, décrit de manière détaillée par la suite, soit stocké dans la mémoire de l'unité centrale.

Par ailleurs, le module de changement de voie est apte à piloter le véhicule afin qu'il se déporte de la voie d'origine vers la voie cible en fonction de l'indicateur de changement de voie ou de l'information représentative d'un changement de voie et de la position dumontant 37 de la voie cible qui est disposé à l'opposé de la voie d'origine. Le trajet durant le changement de voie peut être conforté par des moyens connus tels qu'un marquage au sol détecté par les caméras vidéo du véhicule ou par un guide magnétique détecté par des détecteurs magnétiques.

Ainsi, en fonctionnement dès qu'un véhicule a détecté la présence d'une zone autorisant un changement de voie, soit ledit véhicule garde la distance par rapport au montant 37 de la voie d'origine qui est disposé à l'opposé de l'autre voie adjacente s'il souhaite continuer sur la même voie, soit tourne vers la voie cible. Si le véhicule tourne vers la voie cible, il vient se positionner à une distance prédéfinie du montant 37, disposé à l'opposé de la voie d'origine. Lorsque le deuxième montant 37 de la voie de destination réapparaît, le dispositif de pilotage du véhicule pilote alors le véhicule de manière à ce qu'il vienne se positionner à égale distance des deux montants 37. De manière analogue, si le véhicule continue sur sa voie d'origine, il se repositionne, si nécessaire, à égale distance des deux montants 37, après un certain temps afin de ne pas donner d'à-coup de direction.

En outre, si le changement de voie s'opère d'une voie de desserte vers une voie de circulation rapide, le module de changement de voie est configuré pour augmenter la vitesse du véhicule sur la voie de desserte jusqu'à une vitesse de consigne recommandée ou imposée par le dispositif de gestion du trafic.

A contrario, si le changement de voie s'opère d'une voie de circulation rapide vers une voie de desserte, le module de changement de voie est configuré pour que le véhicule change de file (après un éventuel ralentissement sans gêner les véhicules suiveurs) puis pour diminuer la vitesse du véhicule jusqu'à une vitesse de consigne recommandée ou imposée par le dispositif de gestion du trafic.

Dans la description ci-dessus, le changement de voies est géré, au niveau de chaque véhicule, par un module de changement de voie qui est implémenté dans chacun des véhicules. Toutefois, dans d'autres modes de réalisation, le changement de voie des véhicules est géré d'une façon globale par le dispositif de gestion du trafic.

Par ailleurs, le système de transport comporte un dispositif de gestion des déplacements des véhicules automobiles.

Le dispositif de gestion des déplacements des véhicules automobiles est notamment destiné à remettre un certificat d'accès à un véhicule automobile désirant accéder au système de transport. Le dispositif de gestion des déplacements des véhicules automobiles comporte une mémoire, un processeur, des moyens de communication et des moyens matériels et/ou logiciels lui permettant de mettre en œuvre les fonctionnalités détaillées ci-dessous.

La figure 4 est un diagramme illustrant schématiquement le fonctionnement du dispositif de gestion des déplacements des véhicules automobiles 57.

Le dispositif de gestion des déplacements des véhicules automobiles 57 est configuré pour recevoir une requête 100 comprenant une information d'identification associée à un véhicule automobile, une information temporelle, de départ ou d'arrivée, et une information représentative d'un trajet de l'une des zones d'entrée jusqu'à l'une des zones de sortie. Une telle requête 100 peut notamment être émise par l'unité centrale 46 du véhicule automobile ou par toute interface électronique appropriée, telle qu'un ordinateur, un téléphone ou une borne disposée par exemple à proximité d'une zone d'entrée. Le dispositif de gestion de déplacement des véhicules automobiles 57 est également configuré pour déterminer une variable représentative d'une estimation de trafic sur les voies concernées par ladite requête en fonction de ladite information temporelle et de ladite information représentative d'un trajet. Pour ce faire, le dispositif de gestion des déplacements des véhicules automobiles 57 est susceptible d'utiliser des données statistiques stockées dans sa mémoire et/ou de communiquer avec le dispositif de gestion du trafic afin d'obtenir des informations en temps réel concernant le trafic sur les voies concernées. Par la suite, le dispositif de gestion des déplacements des véhicules automobiles 57 compare la variable représentative d'une estimation de trafic à une valeur seuil et délivre à l'unité centrale 46 du véhicule automobile associé à l'information d'identification, un certificat d'accès 101 lorsque la variable représentative d'une estimation de trafic est inférieure à ladite valeur seuil. Comme nous le verrons par la suite, un tel certificat d'accès est nécessaire pour que le véhicule accède aux voies de circulation rapide.

En d'autres termes, le dispositif de gestion des déplacements des véhicules automobiles 57 n'autorise le véhicule à accéder aux voies de circulation rapide que lorsque le trajet prévu ne transite pas par des voies de circulation susceptibles de présenter un flux de véhicule trop important. Ceci permet d'éviter la saturation de voies.

Dans le cas où la variable représentative d'une estimation de trafic est supérieure à une valeur seuil, le dispositif de gestion des déplacements des véhicules automobiles 57 refuse d'accorder un certificat d'accès correspondant à la requête 100 reçue. Toutefois, selon un mode de réalisation avantageux, le dispositif de gestion des déplacements des véhicules automobiles 57 est apte à transmettre une proposition de requête alternative comprenant une information temporelle de départ ou d'arrivée alternative voire une information représentative d'un trajet alternatif.

Par ailleurs, chaque voie d'entrée des zones d'entrée 6 pour les véhicules automobiles est équipée d'un dispositif de contrôle d'accès 60 dont le fonctionnement sera détaillé ci-dessous en relation avec la figure 6.

Le dispositif de contrôle d'accès 60 comporte une mémoire, un processeur, des moyens de communication avec les véhicules automobiles, par transmission radio par exemple et des moyens matériels et/ou logiciels lui permettant de mettre en oeuvre les fonctionnalités détaillées ci-dessous.

Lorsqu'un véhicule automobile entrant atteint une voie d'entrée, le dispositif de contrôle d'accès 60 détermine une pluralité de caractéristiques spécifiques du véhicule automobile entrant, les compare chacune avec une directive respective, par exemple stockée dans la mémoire, et décide en fonction des comparaisons précitées d'autoriser ou de refuser l'accès dudit véhicule automobile aux voies de circulation rapide.

Selon un mode de réalisation préféré, le dispositif de contrôle d'accès vérifie notamment qu'un certificat d'accès délivré par le dispositif de gestion des déplacements des véhicules automobiles 57 est associé au véhicule automobile entrant.

Selon un mode de réalisation, le dispositif de contrôle d'accès 60 est apte à transmettre à l'unité centrale 46 de chaque véhicule automobile entrant une requête de demande d'informations 104 et l'unité centrale 46 de chaque véhicule automobile est apte à transmettre en réponse à ladite requête de demande d'informations 104, un signal représentatif des informations demandées 105. De manière alternative ou complémentaire, le dispositif de contrôle d'accès 60 peut également comprendre des moyens d'acquisition de caractéristiques spécifiques de chaque véhicule automobile, tels que des capteurs ou une caméra permettant notamment de mesurer les dimensions du véhicule automobile et/ou un dispositif de mesure du poids du véhicule.

A titre d'exemple, les caractéristiques spécifiques du véhicule automobile susceptibles d'être prises en compte par le dispositif de contrôle d'accès 60 comportent une ou plusieurs des caractéristiques suivantes : l'existence d'un certificat d'accès au système de transport, une information d'homologation, des dimensions (largeur, longueur et/ou hauteur), le poids, l'autonomie d'énergie, l'autonomie d'énergie par rapport au trajet demandé et l'état de santé dudit véhicule automobile entrant. Ainsi, grâce à un dispositif de contrôle d'accès 60 réalisant de tels contrôles préalables, le risque de panne dans le système de transport est réduit.

Selon une variante avantageuse, le dispositif de contrôle d'accès 60 est associé à un équipement 61, tel qu'une barrière mobile ou un équipement de signalisation qui est commandé par un signal 106 en fonction de la décision prise par le dispositif de contrôle d'accès 60 et permet ainsi de matérialiser la décision du dispositif de contrôle d'accès 60, à savoir soit d'autoriser l'accès aux voies de circulation rapide soit refuser l'accès en dirigeant le véhicule automobile vers une zone de parking ou une voie de demi-tour.

Par ailleurs, selon un mode de réalisation avantageux, le dispositif de contrôle d'accès 60 comporte des moyens complémentaires de contrôle dynamique du véhicule entrant. Ces moyens complémentaires comportent notamment une caméra et/ou des capteurs, ainsi que des moyens de traitement du signal qui sont configurés pour déterminer un ou plusieurs des paramètres suivants : la trajectoire du véhicule, la vitesse par rapport à une vitesse de consigne, la capacité d'accélération du véhicule et la capacité de décélération du véhicule. Le dispositif de contrôle d'accès 60 est également apte à comparer chacun des paramètres envisagés avec une directive respective et à autoriser ou refuser l'accès dudit véhicule automobile entrant aux voies de circulation rapide.

Par ailleurs, pour plus de sécurité, il est judicieux que le véhicule automobile soit mis en fonctionnement totalement automatique, à l'arrêt, avant de quitter la zone d'entrée en direction des voies de circulation rapide et que le conducteur soit formellement informé qu'il ne peut plus conduire. En d'autres termes, le dispositif de contrôle d'accès 60 est également configuré pour imposer un fonctionnement en mode automatique au véhicule entrant autorisé à accéder, tel que représenté sur le diagramme de la figure 7.

Pour ce faire, selon la variante de réalisation représenté sur la figure 7, après avoir mis en œuvre les contrôles préliminaire détaillés ci-dessus, le dispositif de contrôle d'accès 60 est apte à transmettre à l'unité centrale 46 de chaque véhicule automobile entrant une requête 107 imposant un fonctionnement en mode automatique.

En réponse à cette requête, l'unité centrale 46 du véhicule automobile est apte à transmettre au dispositif de contrôle d'accès 60 un signal 108 confirmant que le véhicule automobile est en mode de fonctionnement automatique si c'est le cas et/ou à générer un signal, sonore ou visuelle, informant le conducteur de la nécessité de déclencher le mode de fonctionnement automatique.

Selon une autre variante de réalisation, l'unité centrale 46 du véhicule automobile déclenche automatiquement le fonctionnement en mode automatique en réponse à une requête imposant un fonctionnement en mode automatique.

Par ailleurs, le dispositif de contrôle d'accès 60 est configuré pour transmettre à chaque véhicule automobile entrant un signal de verrouillage du mode automatique. En réponse à la réception d'un tel signal de verrouillage en mode automatique, l'unité centrale 46 du véhicule automobile rend inopérant pour le conducteur les commandes suivantes : commande de direction, d'accélération, de freinage, de sélection de vitesses, de mise en route et d'arrêt du véhicule automobile jusqu'à ce que ledit véhicule reçoive un signal de déverrouillage du mode automatique.

Par ailleurs, chaque zone de sortie comporte au moins une voie de sortie permettant aux véhicules automobiles de quitter le système de transport. Chaque voie de sortie comporte un dispositif de sortie configuré pour transmettre à chaque véhicule automobile sortant un signal de déverrouillage du mode automatique de manière à rendre opérant les différentes fonctionnalités précitées du véhicule automobile lorsque celui-ci quitte le système de transport, et permettant audit conducteur de reprendre le contrôle du déplacement de son véhicule.

A la sortie, les véhicules automobiles repartent directement dans la rue ou dans une entrée de parking (avec la possibilité de laisser le véhicule se garer tout seul dans le parking, puisque les véhicules conformes disposent de tous les éléments pour permettre ce stationnement automatique).

En relation avec la figure 8, l'on observe que le système de transport comporte également un dispositif de gestion du trafic 62. Le dispositif de gestion du trafic 62 comporte une mémoire, un processeur, des moyens de communication avec les véhicules, par transmission radio par exemple, et des moyens matériels et/ou logiciels lui permettant de mettre en oeuvre les fonctionnalités détaillées ci-dessous.

Le dispositif de gestion du trafic 62 communique avec l'unité centrale 46 des véhicules circulant dans le système de transport. Chacun des véhicules communique à l'unité centrale des informations 109 et notamment sa position géographique et son trajet.

De manière alternative, des capteurs, par exemple utilisant la technologie RFID, peuvent être positionnés le long des voies et délivrer au dispositif de gestion du trafic 62 les informations quant à la position géographique des véhicules.

De plus, selon une variante de réalisation, les véhicules sont équipés de caméra vidéo dont les images sont retransmises au dispositif de gestion du trafic 62.

Le dispositif de gestion du trafic 62 est configuré pour délivrer à l'unité centrale 46 de chaque véhicule circulant sur les voies du système de transport des consignes de vitesse 110 en fonction de la voie de circulation rapide ou de desserte sur laquelle ledit véhicule circule, du trajet et en fonction d'informations représentatives du nombre, de la position géographique et des vitesses des autres véhicules circulant sur lesdites voies.

Pour optimiser le trafic, le dispositif de gestion du trafic 62 attribue notamment des consignes de vitesses plus rapides ou plus lentes aux véhicules selon qu'ils circulent sur la première ou la deuxième voie de circulation rapide d'un même sens de circulation.

Par ailleurs, selon un mode de réalisation de l'invention, le dispositif de gestion du trafic 62 est associé à des moyens de contrôle dynamique, similaires à ceux décrits ci-dessus, et est ainsi apte à transmettre à l'unité centrale 46 d'un véhicule automobile une instruction de rejoindre la prochaine station ou zone de sortie lorsqu'une défaillance ou une autonomie énergétique insuffisante a été détectée.

Le dispositif de gestion du trafic 62 peut également comporter des moyens d'analyse automatique des images transmises par les véhicules, lesdits moyens étant apte à contrôler le bon fonctionnement du réseau et à détecter d'éventuelles anomalies.

Avantageusement, les véhicules automobiles et les navettes de transport collectif sont totalement autonomes sur le réseau, et ne suivent que des directives de vitesses de la part du dispositif de gestion du trafic. Ceci est particulièrement pertinent en termes de sécurité de fonctionnement. En outre, l'unité centrale des véhicules est apte à mémoriser des consignes de vitesses spécifiques de sorte, qu'en cas de panne du dispositif de gestion du trafic ou de problèmes de communication entre celui-ci et l'unité centrale 46, le véhicule soit apte à rejoindre en mode automatique la prochaine station pour les navettes ou la prochaine zone de sortie pour les véhicules automatiques. Ceci évite la paralysie du système de transport, comme cela pourrait avoir lieu dans un système où les véhicules serait commandés en continu, par un système de contrôle, tels que les métros automatiques actuels.

Par ailleurs, le système de transport comporte un système de gestion des déplacements des voyageurs. La figure 5 est un diagramme illustrant schématiquement le fonctionnement du dispositif de gestion des déplacements des voyageurs 58.

Le dispositif de gestion des déplacements des voyageurs 58 vise à mettre en oeuvre un transport à la demande permettant de répondre aux besoins de ponctualité et d'efficacité des voyageurs. Ainsi, le voyageur du transport collectif peut choisir sa station de départ, sa station d'arrivée et son heure de départ souhaitée via une interface électronique appropriée et une navette de transport collectif vient à la station choisie et emmène le voyageur directement à sa station de destination. Un tel transport à la demande est économiquement viable grâce aux petites dimensions des navettes de transport collectif.

Pour ce faire, le dispositif de gestion des déplacements des voyageurs 58 est apte à recevoir une requête 102 d'un voyageur comprenant une information temporelle, une information représentative d'un trajet d'une station départ jusqu'à une station d'arrivée. La requête 102 est susceptible d'être formulée à partir de toute interface électronique 59 appropriée, via un appareil connecté à internet, via un téléphone ou via une borne implantée en station par exemple. En réponse à cette requête 102, le dispositif de gestion des déplacements des voyageurs 58 délivre à ladite interface électronique 59 des informations 103 relatives à une heure de départ d'une navette de transport collectif et à une position de ladite navette de transport collectif sur le quai de la station.

De manière avantageuse, le dispositif de gestion des déplacements des voyageurs 58 est en outre configuré pour déterminer le trajet de navettes de transport collectif en fonction d'une pluralité de requêtes de voyageurs reçues de manière à optimiser le remplissage des navettes de transport collectif.

De plus, le dispositif de gestion des déplacements des voyageurs 58 présentent avantageusement des moyens de traitement des données statistiques permettant d'optimiser la mise en place des véhicules de voyageurs aux abords des stations les plus chargées à l'aide des statistiques et des prévisions de demandes de trajets et/ou permettant ou d'augmenter rapidement la fréquence des navettes sans devoir mobiliser du personnel

La capacité du système de transport selon l'invention est pour une version comprenant une seule voie par sens de circulation supérieure à la capacité d'une autoroute 2 fois 2 voies, et ceci pour une emprise au sol au moins 6 fois plus faible.

Selon un mode de réalisation, les navettes de transport collectif sont des véhicules de dimensions similaires à celles d'une voiture donc beaucoup plus petites qu'un bus, qu'un camion, qu'un tramway ou qu'un train, et disposent d'un confort presque « automobile » avec un large accès et plancher de niveau permettant l'accessibilité aisé aux personnes à mobilité réduite, aux poussettes et aux fauteuils roulants. De plus, en cas de fauteuil roulant, l'information peut être fournie au gestionnaire du système de transport de voyageurs pour qu'il évite de surcharger la navette de transport collectif.

Les navettes de transport collectif présentent de préférence 4, 5 ou 6 places assises avec la possibilité pour les périodes de pointe d'accueillir 8, voire 10 personnes au total, ceci avec des dimensions extérieures, par exemple une longueur de 4 m, une largeur de 2 m et une hauteur de 2,3 m suffisante pour pouvoir accueillir des voyageurs debout.

Certaines navettes de transport collectif peuvent ne recevoir que des passagers assis et par conséquent présenter une hauteur plus faible, par exemple 2 mètres environ. Enfin, une limitation du poids à 2,6 ou 2,8 tonnes permettrait d'accepter 10 voyageurs tout en limitant le poids par essieu et donc les dimensions de l'infrastructure.

Selon un mode de réalisation, certains véhicules, automobiles ou navettes de transport collectif ne présentent que deux places, voire sont monoplaces.

Il pourrait y avoir des véhicules plus longs acceptant plus de passagers, de préférence en gardant les mêmes limitations de hauteur, de largeur et de charge à l'essieu, ou plusieurs véhicules pourraient être accrochés ensemble (physiquement ou par liaison virtuelle) pour faire une partie du trajet en commun.

Les véhicules automobiles peuvent être des véhicules personnels, des voitures utilisées en co-voiturage ou être des véhicules destinés au transport commercial de personnes, tel que des Véhicules de Transport avec Chauffeur (VTC) ou des Taxis. Les véhicules automobiles peuvent aussi être des véhicules de transport de marchandises tels que les Véhicules Utilitaires Légers VUL et avoir une capacité de chargement de plus de 4 m3 comme un NISSAN eNV200 électrique et une charge utile de 1 tonne, avec la même limitation à 2,6 ou 2,8 tonnes en charge si nécessaire.

Certains véhicules automobiles peuvent être des véhicules hybrides, en particulier en cas de longues distances.

Le système de transport peut imposer que les rétroviseurs soient obligatoirement rabattus, en particulier pour respecter les limitations de largeur.

De manière avantageuse, les véhicules automobiles comme les navettes de transport collectif sont équipés d'une interface avec un poste de contrôle de telle sorte qu'une personne puisse demander de s'arrêter à la prochaine station, par exemple en cas d'urgence.

Les dimensions réduites (par rapport à un bus, un tramway ou un métro) permettent de créer des voies aériennes de faible impact visuel et avec peu de matériau, tous recyclables, et en réduisant la durée des travaux qui sont toujours sources de nuisances, et pouvant même s'implanter dans des rues de dimensions moyennes.

Enfin, un des très gros problèmes dans les transports, c'est la congestion. Le système de Transport selon l'invention utilisant avantageusement des voies sur pylônes, permet d'augmenter le nombre de voies de circulation sur un site donné, en réduisant de ce fait les risques de congestion, sans réduire la surface allouée aux autres moyens de déplacement.

Les voies peuvent être couvertes en partie ou en totalité, et leur architecture ou leur aspect peuvent être conçues en correspondance avec les lieux traversés.

Selon une version privilégiée de l'invention, les véhicules ne fonctionnent qu'à l'électricité et n'émettent pas de pollution atmosphérique localement.

Dans une version préférée de l'invention, tous les véhicules sont autonomes en énergie, au moins en partie pour réaliser tout ou partie des trajets en autonomie.

Pour cela il est préférable d'avoir des véhicules équipés de batterie. Ils peuvent être alimentés par recharge à induction le long des voies. Ils peuvent aussi être alimentés en Hydrogène, ou tout autre moyen de préférence non polluant.

Le système de transport étant de préférence avec des voies aériennes, il y a peu d'emprise au sol. Un autre avantage du système de transport selon l'invention est la possibilité de réaliser des voies dans les deux sens, en utilisant des voies ferrées (éventuellement désaffectées) en particulier celles qui sont mono voie et qui ne permettaient que des trains alternativement pour chaque sens. Avec le système de transport selon l'invention, il est possible sur ces monovoies de chemin de fer, d'installer des voies sur pylônes, libérant la surface au sol et supprimant de plus les éventuels passages à niveaux pour une meilleure sécurité.

Les voies peuvent aussi être implantées au-dessus ou à côté des voies ferrées en service. De même, les voies peuvent être implantées le long d'une route, d'une autoroute, au milieu ou sur les côtés. Les voies peuvent aussi utiliser des ponts existants.

Bien entendu, il est quelquefois nécessaire de passer les voies en tunnel. Du fait des petites dimensions des voies et des véhicules, il est possible de réaliser des tunnels de petit diamètre moins couteux que les tunnels de grand diamètre. En particulier, dans un tunnel de 7,5 m de diamètre intérieur, il est possible de créer deux fois deux voies superposées, avec en haut, une voie rapide et une seconde voie rapide ou une voie de desserte et en dessous, une voie rapide et une seconde voie rapide ou une voie de desserte.

Dans un tunnel de 9,5 m de diamètre intérieur, il est même possible de réaliser deux fois trois voies superposées, avec en haut, une voie de desserte et deux voies rapides dont l'une à grande vitesse, et en dessous, une voie de desserte et deux voies rapides dont l'une à grande vitesse. Ainsi, dans un tunnel d'un diamètre équivalent à celui d'un métro, il est possible d'avoir un débit équivalent à celui d'un métro automatique de dernière génération de l'ordre de 40 000 voyageurs par heure, mais avec une vitesse potentielle de 80 à 100 km/h sur la voie la plus rapide, voire plus, permettant des durées de trajet beaucoup plus réduites.

Dans tous les cas, le système peut utiliser des tunnels désaffectés.

Un autre avantage du système de transport selon l'invention est la polyvalence et la possibilité de se substituer à presque tous les transports en commun terrestres. En effet, combinant transports privés et transports publics, pour de petits trajets de 3/5 km en zone très dense, mais aussi servir pour de très grands trajets de plusieurs centaines de km.

Le Système de transport peut aussi permettre à des véhicules automobiles de faire du co voiturage en s'arrêtant à des stations de voyageurs pour en prendre et en déposer pour optimiser le remplissage des dits véhicules. Eventuellement, il peut être préférable que la pose et dépose de co voiturage se fasse dans des stations spécifiques.

Le système de transport peut disposer de véhicules spéciaux, automatiques pour le nettoyage des voies, sans avoir besoin de conducteur. Ces véhicules peuvent éventuellement être télécommandés par un opérateur situé par exemple à un poste de contrôle.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Système de transport comportant :
- des véhicules qui sont chacun équipés de pneumatiques, d'au moins un moteur électrique (44) et d'une réserve d'énergie interne (45) qui participent au moins partiellement à la propulsion dudit véhicule,
- le système étant **caractérisé en ce que** lesdits véhicules sont chacun équipés de capteurs embarqués (47, 48, 49, 50, 51, 52) et de roues directrices (53, 54), lesdits véhicules étant d'une part des véhicules automobiles (17, 18) aptes à fonctionner dans un mode automatique dans lequel le conducteur n'intervient pas sur le pilotage du véhicule automobile, et d'autre part des navettes de transport collectif de voyageurs (19, 20, 21, 22, 23) aptes à fonctionner automatiquement sans conducteur, lesdits véhicules étant aptes à se guider à l'aide des capteurs embarqués et des roues directrices ;
- une pluralité de voies de circulation rapide (2, 3, 4, 5,25, 26, 27, 28) à sens unique comportant au moins une voie de circulation par sens de circulation, lesdites voies de circulation rapide étant chacune dépourvues d'intersection, dépourvues de croisement, dépourvues de point d'arrêt,;
- une pluralité de voies de desserte (9, 11, 10, 12, 13, 14, 15, 16, 33, 35) permettant l'accès desdits véhicules aux voies de circulation rapide et reliant lesdites voies de circulation rapide à des zones d'entrée (6) pour les véhicules automobiles, à des zones de sortie (7) pour les véhicules automobiles et à des stations (8, 29) pour les navettes de transport collectif ;
- les zones d'entrée (6) pour les véhicules automobiles comportant des voies d'entrée qui sont chacune reliées à au moins une voie de circulation rapide par une voie de desserte (9, 10); chaque voie d'entrée comportant un dispositif de contrôle d'accès (60) configuré pour :
- déterminer au moins une caractéristique spécifique d'un véhicule automobile entrant choisie parmi un certificat d'accès, une information d'homologation, des dimensions, le poids, l'autonomie d'énergie et l'état de santé dudit véhicule automobile entrant ;
- comparer ladite au moins une caractéristique spécifique contrôlée avec une directive ;
- autoriser ou refuser l'accès du véhicule automobile aux voies de circulation rapide en fonction de ladite comparaison ; et
- imposer un fonctionnement en mode automatique d'un véhicule automobile entrant autorisé à accéder et transmettre audit véhicule automobile entrant un signal de verrouillage du mode automatique ; lesdits véhicules automobiles étant agencés pour, en réponse à la réception dudit signal de verrouillage du mode automatique, rendre inopérant pour le conducteur les commandes de direction, d'accélération, de freinage, de sélection de vitesses, de mise en route et d'arrêt du véhicule automobile;
- les zones de sortie (7) pour véhicules automobiles étant reliées aux voies de circulation rapide par des voies de desserte (11, 12) et comportant des voies de sortie, chaque voie de sortie comportant un dispositif de sortie configuré pour transmettre à chaque véhicule automobile sortant un signal de déverrouillage du mode automatique ; lesdits véhicules automobiles étant agencés pour, en réponse à la réception dudit signal de verrouillage du mode automatique, rendre opérant pour le conducteur les commandes de direction, d'accélération, de freinage, de sélection de vitesses, de mise en route et d'arrêt du véhicule automobile et permettre audit conducteur de reprendre le contrôle du déplacement de son véhicule ;
- les stations (8, 29) pour les navettes de transport collectif comportant chacune un quai (30) permettant à des voyageurs d'entrer ou de sortir de l'une des navettes de transport collectif, lesdites stations pour les navettes de transport collectif étant chacune reliées à au moins une voie de circulation par au moins deux voies de desserte respectivement de départ et d'arrivée ;
- un dispositif de gestion du trafic (62) configuré pour délivrer à chaque véhicule circulant sur les voies de circulation rapide et de desserte du système de transport des consignes de vitesse en fonction de la voie de circulation rapide ou de desserte sur laquelle ledit véhicule circule et en fonction d'informations représentatives du nombre, de la position géographique et des vitesses des autres véhicules circulant sur lesdites voies.

2. Système de transport selon la revendication 1, comportant en outre un dispositif de gestion des déplacements des véhicules automobiles (57) qui est configuré pour :
- recevoir une requête comprenant une information d'identification associée à un véhicule automobile, une information temporelle de départ et une information représentative d'un trajet de l'une des zones d'entrée jusqu'à l'une des zones de sortie;
- déterminer une variable représentative d'une estimation de trafic sur les voies concernées par ladite requête en fonction de ladite information temporelle de départ et de ladite information représentative d'un trajet ;
- comparer la variable représentative d'une estimation de trafic à une valeur seuil ; et
- délivrer au véhicule automobile associé à l'information d'identification un certificat d'accès lorsque la variable représentative d'une estimation de trafic est inférieure à ladite valeur seuil ;
chaque dispositif de contrôle d'accès (60) étant configuré pour déterminer si un véhicule automobile est associé à un certificat d'accès et à autoriser l'accès audit véhicule automobile lorsqu'il est associé à un certificat d'accès.

3. Système de transport selon la revendication 1 ou 2, comportant en outre un dispositif de gestion des déplacements des voyageurs (58) configuré pour :
- recevoir une requête d'un voyageur comprenant une information temporelle, une information représentative d'un trajet d'une station pour navettes de transport collectif de départ jusqu'à une station de navettes de transport collectif d'arrivée ;
- délivrer au voyageur en réponse à ladite requête, une information personnelle relative à une heure de départ d'une navette de transport collectif et une information personnelle relative à une position de ladite navette de transport collectif sur le quai de la station pour navettes de transport collectif de départ.

4. Système de transport selon la revendication 3, dans lequel le dispositif de gestion des déplacements des voyageurs (58) est en outre configuré pour déterminer un trajet d'une navette de transport collectif en fonction d'une pluralité de requêtes de voyageurs reçues de manière à optimiser le remplissage de ladite navette de transport collectif.

5. Système de transport selon l'une quelconque des revendications 1 à 4, dans lequel le dispositif de contrôle d'accès (60) comporte des moyens complémentaires de contrôle dynamique du véhicule entrant par l'une des voies d'entrée, qui sont configurés pour :
- déterminer au moins une caractéristique représentative du comportement dynamique d'un véhicule entrant, choisi parmi la qualité des trajectoires, la vitesse par rapport à une vitesse de consigne, les capacités d'accélération et de décélération du véhicule entrant ;
- comparer ladite caractéristique représentative du comportement dynamique du véhicule entrant contrôlée à une directive ; et
- autoriser ou refuser l'accès du véhicule automobile en fonction de ladite comparaison.

6. Système de transport selon l'une quelconque des revendications 1 à 5, dans lequel le quai (30) d'au moins l'une des stations (29) pour les navettes de transport collectif comporte de portes palières (32) , des détecteurs de présence (41) aptes à détecter la présence d'une navette de transport collectif devant chacune des portes palières(32) et des moyens de commande des portes palières (42) aptes à déclencher l'ouverture de l'une des portes palières (32) en réponse à la détection d'une navette de transport devant ladite porte palière (32).

7. Système de transport selon l'une quelconque des revendications 1 à 6, dans lequel les zones d'entrée (6), les zones de sortie (7) et/ou les stations pour les navettes de transport collectif (8, 29) comportent des zones de stationnement équipées d'un dispositif de recharge d'énergie ou d'un dispositif d'échange de batterie.

8. Système de transport selon l'une quelconque des revendications 1 à 7, dans lequel les voies de circulation rapide, de desserte, d'entrée et de sortie comportent des bandes de roulement en béton lavé ou en béton fibré.

9. Système de transport selon l'une quelconque des revendications 1 à 8, dans lequel les voies de circulation rapide, de desserte, d'entrée et de sortie comportent des bandes de roulement qui sont séparées par un espace qui permet aux eaux de ruissellement et autres salissures de s'évacuer.

10. Système de transport selon l'une quelconque des revendications 1 à 9, comportant un tunnel présentant un diamètre intérieur de l'ordre de 7.5 m traversé par un premier ensemble de deux voies pour l'une des directions et un deuxième ensemble de deux voies pour l'autre des directions, ledit deuxième ensemble étant disposé au-dessus ou en dessous du premier ensemble; chacun des premier et deuxième ensemble de deux voies comportant deux voies de circulation rapide ou une voie de circulation rapide et une voie de desserte.

11. Système de transport selon l'une quelconque des revendications 1 à 10, comportant un tunnel présentant un diamètre intérieur de l'ordre de 9.5 m traversé par un premier ensemble de trois voies pour l'une des directions et un deuxième ensemble de trois voies pour l'autre des directions, ledit deuxième ensemble étant disposé au-dessus ou en dessous du premier ensemble ; chacun des premier et deuxième ensemble de trois voies comportant trois voies de circulation rapide ou deux voies de circulation rapide et une voie de desserte.

12. Système de transport selon l'une quelconque des revendications 1 à 11, dans lequel les voies de circulation rapide (2, 3, 4, 5, 25, 26, 27, 28) et lesdites voies de desserte (9, 11, 10, 12, 13, 14, 15, 16) sont limitées de chaque côté par des montants (37); lesdites voies de circulation rapide et de desserte ne comportant pas de montant (37) entre les voies dans chaque emplacement dédié à un changement de voies.

13. Système de transport selon la revendication 12, dans lequel les montants (37) servent de guidage et dans lequel les capteurs embarqués (47, 48, 49, 50, 51, 52) sont des radars à ultrasons positionnés à l'avant, à l'arrière et sur les côtés des véhicules et aptes à détecter lesdits montants (37).

14. Système de transport selon la revendication 12 ou 13, dans lequel les véhicules sont chacun équipés d'un dispositif de pilotage qui comporte un module de changement de voies entre une voie d'origine et une voie cible, ledit module de changement de voies étant relié auxdits capteurs embarqués (47, 48, 49, 50, 51, 52) et étant configuré pour:
- détecter un indicateur de changement de voie constitué par une discontinuité du montant (37) séparant la voie d'origine de la voie cible ou par un indicateur optique ; ou
- traiter un information représentative d'un changement de voie délivré par le dispositif de gestion du trafic ou stocké dans une mémoire du véhicule ;
- détecter la position de l'un des montants de la voie cible ; et
- piloter ledit véhicule de manière à ce qu'il se déporte de la voie d'origine vers la voie cible en fonction de l'indicateur de changement de voie ou de l'information représentative d'un changement de voie et de la position de l'un des montants de la voie cible.

15. Système de transport selon l'une quelconque des revendications 1 à 14, **caractérisé en ce qu'**au moins l'un des véhicules comporte au moins quatre roues équipées chacune d'un moteur intégré et pouvant chacune tourner pour assurer la direction du véhicule.

16. Système de transport selon l'une quelconque des revendications 1 à 15, dans lequel au moins l'une des voies est équipée d'un dispositif de charge par induction apte à délivrer un champ magnétique et dans lequel au moins l'un des véhicules automobiles ou l'une des navettes de transport collectif est équipé d'un récepteur apte à transformer le champ magnétique en un courant électrique afin de recharger une batterie.

17. Système de transport selon la revendication 3, dans lequel le dispositif de gestion des déplacements des voyageurs (58) est configuré en outre pour que des navettes de transport collectif présélectionnées s'arrêtent à certaines stations, à horaires prédéterminés et pour des trajets prédéterminés, pour prendre les passagers qui le souhaitent et déposer ceux qui souhaitent en sortir, selon un transport cadencé.

18. Système de transport selon l'une quelconque des revendications 1 à 17, comportant des stations (30) construites au niveau du sol, ne nécessitant pas d'escalier pour être utilisées par les voyageurs et comportant des voies de desserte (33) sous forme de rampes d'accès (34) pour relier les voies de circulation rapide.

19. Système de transport selon l'une quelconque des revendications 1 à 17, ne comportant que des véhicules équipés d'un système de mémorisation de données apte à mémoriser les informations nécessaires au fonctionnement desdits véhicules sur lesdites voies, lesdits véhicules étant agencés pour rouler de manière autonome jusqu'à la prochaine voie de sortie ou jusqu'à la prochaine station au moyen desdites informations mémorisées dans le système de mémorisation.

20. Système de transport selon l'une quelconque des revendications 1 à 18, prise en combinaison avec la revendication 6, comportant un système de reconnaissance devant les portes palières pour détecter qu'il s'agit bien d'un voyageur ayant réservé.

21. Système de transport selon l'une quelconque des revendications 1 à 20, comportant des navettes de transport public équipées d'un système de reconnaissance pour détecter quand le voyageur ayant réservé est présent dans la navette et quand il est sorti.

## Patentansprüche

1. Transportsystem, umfassend:
- Fahrzeuge, die jeweils mit Reifen, mindestens einem Elektromotor (44) und einer internen Energiereserve (45) versehen sind, die mindestens teilweise zum Antrieb des Fahrzeuges beitragen,
- wobei das System **dadurch gekennzeichnet ist, dass** die genannten Fahrzeuge jeweils mit mitgeführten Sensoren (47, 48, 49, 50, 51, 52) und lenkbaren Rädern (53, 54) ausgestattet sind, wobei die genannten Fahrzeuge einerseits Kraftfahrzeuge (17, 18) sind, die in der Lage sind, in einer automatischen Betriebsart zu arbeiten, in dem der Fahrer nicht auf die Steuerung des Kraftfahrzeuges Einfluss nimmt, und andererseits öffentliche Personenbeförderungsmittel (19, 20, 21, 22, 23), die in der Lage sind, automatisch zu arbeiten, ohne Fahrer, wobei die genannten Fahrzeuge in der Lage sind, sich mit Hilfe der mitgeführten Sensoren und der lenkbaren Räder zu lenken,
- wobei mehrere Schnellverkehrsstraßen (2, 3, 4, 5, 25, 26, 27, 28) mit Einrichtungsverkehr mindestens eine Fahrbahn je Verkehrsrichtung aufweisen, wobei die genannten Schnellverkehrsstraßen jeweils frei von Kreuzungen und Haltestellen sind,
- wobei mehrere Zubringerstraßen (9, 10, 11, 12, 13, 14, 15, 16, 33, 35) den Zugang der genannten Fahrzeuge zu den Schnellverkehrsstraßen erlauben und die genannten Schnellverkehrsstraßen mit Einfahrtsbereichen (6) für die Kraftfahrzeuge, mit Ausfahrtsbereichen (7) für die Kraftfahrzeuge und mit Haltestellen (8, 29) für die öffentlichen Beförderungsmittel verbinden,
- wobei die Einfahrtsbereiche (6) für die Kraftfahrzeuge Einfahrtsspuren aufweisen, die jeweils mit mindestens einer Schnellverkehrsstraße je Zubringerstraße (9, 10) verbunden sind und wobei jede Einfahrtsspur eine Zugangskontrolleinrichtung (60) aufweist, die dafür eingerichtet ist:
- mindestens ein spezifisches Merkmal eines einfahrenden Kraftfahrzeuges unter Zugangsberechtigung, Zulassungsinformation, Abmessungen, Gewicht, Energiereserve und Gesundheitszustand des genannten einfahrenden Kraftfahrzeuges zu bestimmen,
- das genannte mindestens eine kontrollierte spezifische Merkmal mit einer Vorschrift zu vergleichen,
- den Zugang des Kraftfahrzeuges zu den Schnellverkehrsstraßen in Abhängigkeit vom genannten Vergleich zu erlauben oder zu verweigern, und
- den Betrieb eines zum Zugang zugelassenen Kraftfahrzeuges in der automatischen Betriebsart aufzuerlegen und dem genannten einfahrenden Kraftfahrzeug ein Signal zur Verriegelung der automatischen Betriebsart zu senden, wobei die genannten Kraftfahrzeuge dafür eingerichtet sind, in Reaktion auf den Empfang des genannten Signals zur Verriegelung der automatischen Betriebsart die Lenk-, Beschleunigungs-, Brems-, Gangwechsel-, Anlass- und Anhaltemittel des Kraftfahrzeuges für den Fahrer unbetätigbar zu machen,
- wobei die Ausfahrtsbereiche (7) für Kraftfahrzeuge durch Zubringerstraßen (11, 12) mit den Schnellverkehrsstraßen verbunden sind und Ausfahrtsspuren aufweisen, wobei jede Ausfahrtsspur eine Ausfahrtseinrichtung aufweist, die dafür eingerichtet ist, jedem ausfahrenden Kraftfahrzeug ein Signal zur Entriegelung der automatischen Betriebsart zu senden und die genannten Kraftfahrzeuge dafür eingerichtet sind, in Reaktion auf den Empfang des genannten Entriegelungssignals die Lenk-, Beschleunigungs-, Brems-, Gangwechsel-, Anlass- und Anhaltemittel des Kraftfahrzeuges für den Fahrer betätigbar zu machen und dem genannten Fahrer zu erlauben, die Steuerung der Bewegungen seines Fahrzeuges wieder zu übernehmen,
- wobei die Haltestellen (8, 29) für die öffentlichen Beförderungsmittel jeweils eine Plattform aufweisen, die den Reisenden erlaubt, in eines der öffentlichen Beförderungsmittel zu steigen oder es zu verlassen, wobei die genannten Haltestellen für öffentliche Beförderungsmittel jeweils durch mindestens zwei Zubringerspuren für Ankunft bzw. Abfahrt mit mindestens einer Verkehrsstraße verbunden sind,
- wobei eine Verkehrsleiteinrichtung (62) dafür eingerichtet ist, jedem Fahrzeug, das auf den Schnell- und Zubringerstraßen des Transportsystems fährt, Geschwindigkeitsauflagen in Abhängigkeit von der Schnell- oder Zubringerstraße, auf der das Fahrzeug fährt, und in Abhängigkeit von Informationen auszugeben, die die Zahl, die geographische Position und die Geschwindigkeiten der anderen Fahrzeuge angeben, die auf den genannten Straßen fahren.

2. Transportsystem nach Patentanspruch 1, außerdem eine Einrichtung zur Leitung der Bewegungen der Kraftfahrzeuge (57) aufweisend, die dafür eingerichtet ist:
- eine Anfrage zu empfangen, die eine einem Kraftfahrzeug zugehörige Identifizierungsinformation, eine Abfahrtszeitinformation und eine Information enthaltend, die einen Weg von einem der Einfahrtsbereiche bis zu einem der Ausfahrtsbereiche angibt,
- eine Variable zu bestimmen, die eine Verkehrsabschätzung auf den von der genannten Anforderung betroffenen Straßen in Abhängigkeit von der genannten Abfahrtszeitinformation und der Weginformation angibt,
- die die Verkehrsabschätzung angebende Variable mit einem Schwellenwert zu vergleichen, und
- dem der Identifizierungsinformation zugehörigen Kraftfahrzeug eine Zugangsberechtigung auszustellen, wenn die die Verkehrsabschätzung angebende Variable unter dem genannten Schwellenwert liegt,
wobei jede Zugangskontrolleinrichtung (60) dafür eingerichtet ist zu bestimmen, ob ein Kraftfahrzeug mit einer Zugangsberechtigung verbunden ist und dem genannten Kraftfahrzeug den Zugang zu gewähren, wenn es mit einer Zugangsberechtigung verbunden ist.

3. Transportsystem nach Patentanspruch 1 oder 2, außerdem eine Vorrichtung zur Leitung der Bewegungen der Reisenden (58) aufweisend, dafür eingerichtet
- eine Anfrage eines Reisenden zu empfangen, die eine Zeitinformation enthält, eine Information, die einen Weg von einer Abfahrts-Haltestelle öffentlicher Beförderungsmittel bis zu einer Ankunfts-Haltestelle öffentlicher Beförderungsmittel angibt,
- dem Reisenden in Antwort auf die genannte Anfrage eine persönliche Information über eine Abfahrtszeit eines öffentlichen Beförderungsmittels und eine persönliche Information über eine Position des genannten öffentlichen Beförderungsmittels auf der Plattform der Abfahrts-Haltestelle öffentlicher Beförderungsmittel auszugeben.

4. Transportsystem nach Patentanspruch 3, in dem die Vorrichtung zur Leitung der Bewegungen der Reisenden (58) außerdem dafür eingerichtet ist, in Abhängigkeit von mehreren von Reisenden erhaltenen Anfragen einen Weg eines öffentlichen Beförderungsmittels festzulegen, um die Auslastung des genannten öffentlichen Beförderungsmittels zu optimieren.

5. Transportsystem nach irgendeinem der Patentansprüche 1 bis 4, in dem die Zugangskontrollvorrichtung (60) zusätzliche Mittel zur dynamischen Kontrolle des auf einer der Einfahrtsspuren einfahrenden Fahrzeugs umfasst, die dafür eingerichtet sind:
- mindestens ein Merkmal zu bestimmen, das das dynamische Verhalten des einfahrenden Fahrzeuges angibt, ausgewählt unter der Qualität der Fahrtbewegungen, der Geschwindigkeit relativ zu einer vorgeschriebenen Geschwindigkeit, der Beschleunigungs-und der Bremsfähigkeiten des einfahrenden Fahrzeuges,
- das genannte Merkmal, das das dynamische Verhalten des kontrollierten einfahrenden Fahrzeuges angibt, mit einer Vorschrift zu vergleichen, und
- in Abhängigkeit vom genannten Vergleich den Zugang des Kraftfahrzeuges zu gewähren oder zu verweigern.

6. Transportsystem nach irgendeinem der Patentansprüche 1 bis 5, in dem die Plattform (30) mindestens einer der Haltestellen (29) für die öffentlichen Beförderungsmittel Schwenktüren (32), Anwesenheitsmelder (41), geeignet, die Anwesenheit eines öffentlichen Beförderungsmittels vor jeder der Schwenktüren (32) festzustellen, und Mittel zur Betätigung der Schwenktüren (42), geeignet, die Öffnung einer der Schwenktüren (32) in Reaktion auf die Detektion eines Beförderungsmittels vor der genannten Schwenktür (32) auszulösen.

7. Transportsystem nach irgendeinem der Patentansprüche 1 bis 6, in dem die Einfahrtsbereiche (6), die Ausfahrtsbereiche (7) und/oder die Haltestellen für die öffentlichen Beförderungsmittel (8, 29) Parkbereiche aufweisen, die mit einer Vorrichtung zur Aufladung mit Energie oder einer Vorrichtung zum Batteriewechsel ausgestattet sind.

8. Transportsystem nach irgendeinem der Patentansprüche 1 bis 7, in dem die Schnellverkehrs- und Zubringerstraßen, Einfahrts- und Ausfahrtsspuren über Rollflächen aus Waschbeton oder Faserbeton verfügen.

9. Transportsystem nach irgendeinem der Patentansprüche 1 bis 8, in dem die Schnellverkehrs- und Zubringerstraßen, Einfahrts- und Ausfahrtsspuren über Rollflächen verfügen, die durch einen Raum getrennt sind, der Rieselwasser und anderen Verschmutzungen erlaubt, abzufließen.

10. Transportsystem nach irgendeinem der Patentansprüche 1 bis 9, einen Tunnel aufweisend, der einen Innendurchmesser in der Größenordnung von 7,5 m aufweist, der von einer ersten Einheit aus zwei Fahrbahnen für eine der Richtungen und einer zweiten Einheit aus zwei Fahrbahnen für die andere der Richtungen durchquert wird, wobei die genannte zweite Einheit über oder unter der ersten Einheit angeordnet ist, wobei jede der Einheiten aus zwei Fahrbahnen, die erste und die zweite, zwei Fahrbahnen für Schnellverkehr oder eine Fahrbahn für Schnellverkehr und eine Zubringerfahrbahn aufweist.

11. Transportsystem nach irgendeinem der Patentansprüche 1 bis 10, einen Tunnel aufweisend, der einen Innendurchmesser in der Größenordnung von 9,5 m aufweist, der von einer ersten Einheit aus drei Fahrbahnen für eine der Richtungen und einer zweiten Einheit aus drei Fahrbahnen für die andere der Richtungen durchquert wird, wobei die genannte zweite Einheit über oder unter der ersten Einheit angeordnet ist, wobei jede der Einheiten aus drei Fahrbahnen, die erste und die zweite, drei Fahrbahnen für Schnellverkehr oder zwei Fahrbahnen für Schnellverkehr und eine Zubringerfahrbahn aufweist.

12. Transportsystem nach irgendeinem der Patentansprüche 1 bis 11, in dem die genannten Schnellverkehrsstraßen (2, 3, 4, 5, 25, 26, 27, 28) und die genannten Zubringerstraßen (9, 10, 11, 12, 13, 14, 15, 16) beiderseits durch Pfosten (37) begrenzt sind, während die genannten Schnellverkehrsstraßen und Zubringerstraßen zwischen den Fahrbahnen an jeder Stelle, die einem Fahrbahnwechsel dient, keine Pfosten aufweisen.

13. Transportsystem nach Patentanspruch 12, in dem die Pfosten (37) der Leitung dienen und in dem die mitgeführten Sensoren (47, 48, 49, 50, 51, 52) Ultraschallradars sind, die vorne, hinten und an den Seiten der Fahrzeuge angeordnet und in der Lage sind, die genannten Pfosten (37) zu detektieren.

14. Transportsystem nach Patentanspruch 12 oder 13, in dem die Fahrzeuge jeweils mit einem Lenksystem ausgestattet sind, das ein Fahrbahnwechselmodul zum Wechsel zwischen einer Ausgangsfahrbahn und einer Zielfahrbahn umfasst, wobei das genannte Fahrbahnwechselmodul mit den genannten mitgeführten Sensoren (47, 48, 49, 50, 51, 52) verbunden und dafür eingerichtet ist:
- einen Fahrbahnwechselanzeiger, bestehend in einer Unterbrechung des Pfostens (37), der die Ausgangsfahrbahn von der Zielfahrbahn trennt, oder in einem optischen Anzeiger, zu detektieren, oder
- eine Information zu verarbeiten, die einen Fahrbahnwechsel angibt, die von der Verkehrsleiteinrichtung ausgegeben wurde oder in einem Speicher des Fahrzeuges gespeichert ist,
- die Position eines der Pfosten der Zielfahrbahn zu detektieren, und
- das genannte Fahrzeug derart zu steuern, dass es sich in Abhängigkeit vom Fahrbahnwechselanzeiger oder der einen Fahrbahnwechsel angebenden Information und von der Position eines der Pfosten der Zielfahrbahn von der Ausgangsfahrbahn auf die Zielfahrbahn begibt.

15. Transportsystem nach irgendeinem der Patentansprüche 1 bis 14, **dadurch gekennzeichnet, dass** mindestens eins der Fahrzeuge mindestens vier Räder aufweist, die jeweils mit einem eingebauten Motor versehen sind und von denen jedes sich drehen kann, um die Richtung des Fahrzeuges sicherzustellen.

16. Transportsystem nach irgendeinem der Patentansprüche 1 bis 15, in dem mindestens eine der Fahrbahnen mit einer Induktionsladevorrichtung ausgestattet ist, in der Lage, ein Magnetfeld zu erzeugen, und in dem mindestens eins der Kraftfahrzeuge oder eins der öffentlichen Beförderungsmittel mit einem Empfänger ausgestattet ist, der in der Lage ist, das Magnetfeld in einen elektrischen Strom umzuwandeln, um eine Batterie zu laden.

17. Transportsystem nach Patentanspruch 3, in dem die Vorrichtung zur Leitung der Bewegungen der Reisenden (58) außerdem dafür eingerichtet ist, dass ausgewählte öffentliche Beförderungsmittel in einem getakteten Verkehr zu festgelegten Zeitpunkten und auf festgelegten Linien an festgelegten Haltestellen anhalten, um Fahrgäste aufzunehmen, die dies wünschen, und diejenigen, die aussteigen wollen, abzusetzen.

18. Transportsystem nach irgendeinem der Patentansprüche 1 bis 17, Haltestellen (30) aufweisend, die in Bodenhöhe gebaut sind und keine Treppe benötigen, um von Reisenden benutzt zu werden, und Zubringerwege (33) in Form von Zugangsrampen (34) aufweisend, um die Schnellverkehrsstraßen zu verbinden.

19. Transportsystem nach irgendeinem der Patentansprüche 1 bis 17, ausschließlich Fahrzeuge aufweisend, die mit einem System zur Datenspeicherung ausgestattet sind, das geeignet ist, die zum Betrieb der genannten Fahrzeuge auf den genannten Straßen erforderlichen Informationen zu speichern, wobei die genannten Fahrzeuge dafür eingerichtet sind, bis zur nächsten Ausfahrtstraße oder bis zur nächsten Haltestelle mit Hilfe der genannten, im Speicherungssystem gespeicherten Informationen autonom zu fahren.

20. Transportsystem nach irgendeinem der Patentansprüche 1 bis 18 in Kombination mit Patentanspruch 6, ein Erkennungssystem vor den Schwenktüren aufweisend, um festzustellen, ob es sich tatsächlich um einen Reisenden handelt, der reserviert hat.

21. Transportsystem nach irgendeinem der Patentansprüche 1 bis 20, öffentliche Beförderungsmittel umfassend, die mit einem Erkennungssystem ausgestattet sind, um festzustellen, wenn der Reisende, der reserviert hat, im Beförderungsmittel anwesend ist und wenn er ausgestiegen ist.

## Claims

1. A transport system comprising:
- vehicles each of which is equipped with tires, with at least one electric motor (44) and with an internal energy reserve (45) which at least partially contribute to the propulsion of said vehicle,
the transport system being **characterized in that** the vehicles are each equipped with onboard sensors (47, 48, 49, 50, 51, 52) and with steered wheels (53, 54), said vehicles being, on the one hand, automotive vehicles (17, 18) able to operate in an automatic mode in which the driver plays no part in controlling the automotive vehicle, and, on the other hand, collective passenger transport shuttles (19, 20, 21, 22, 23) able to operate automatically and driverlessly, said vehicles being able to guide themselves using the onboard sensors and the steered wheels;
- a plurality of one-way high-speed-traffic lanes (2, 3, 4, 5,25, 26, 27, 28) comprising at least one traffic lane per direction of traffic, said high-speed-traffic lanes each having no intersections, having no crossings, having no stopping points;
- a plurality of service lanes (9, 11, 10, 12, 13, 14, 15, 16, 33, 35) allowing said vehicles access to the high-speed-traffic lanes and connecting said high-speed-traffic lanes to entry zones (6) for the automotive vehicles, to exit zones (7) for the automotive vehicles and to stations (8, 29) for the public transport shuttles;
- the entry zones (6) for the automotive vehicles comprising entry lanes which are each connected to at least one high-speed-traffic lane by a service lane (9, 10); each entry lane comprising an access control device (60) configured to:
- determine at least one specific characteristic of an entering automotive vehicle, chosen from among an access certificate, homologation information, dimensions, the weight, the range autonomy and the state of health of said entering automotive vehicle;
- compare said at least one checked specific characteristic against a guideline;
- allow or refuse the automotive vehicle access to the high-speed-traffic lanes, according to said comparison; and
- force an entering automotive vehicle with access authorization to operate in automatic mode and transmit to said entering automotive vehicle a signal to lock the automatic mode; said automotive vehicles being designed to, in response to receipt of said signal for locking the automatic mode, render the controls for steering, accelerating, braking, gear selection, starting and stopping the automotive vehicle inoperative by the driver;
- the exit zones (7) for automotive vehicles being connected to the high-speed-traffic lanes by service lanes (11, 12) and comprising exit lanes, each exit lane comprising an exit device configured to transmit to each leaving automotive vehicle a signal to unlock the automatic mode; said automotive vehicles being designed to, in response to receipt of said signal for unlocking the automatic mode, render the controls for steering, accelerating, braking, gear selection, starting and stopping the automotive vehicle operative by the driver and allow said driver to resume control of the movement of his vehicle;
- the stations (8, 29) for the public transport shuttles each comprising a platform (30) allowing travelers to enter or leave one of the public transport shuttles, said stations for the public transport shuttles each being connected to at least one traffic lane by at least two service lanes, these respectively being a departure and an arrival service lane;
- a traffic management device (62) configured to deliver to each vehicle traveling on the high-speed-traffic and service lanes of the transport system speed setpoints dependent on the high-speed-traffic or service lane on which said vehicle is traveling and dependent on information indicative of the number, geographical position and speeds of the other vehicles traveling in said lanes.

2. The transport system as claimed in claim 1, further comprising an automotive-vehicle movement management device (57) that is configured to:
- receive a request comprising identification information associated with an automotive vehicle, departure time information and information indicative of a journey from one of the entry zones to one of the exit zones;
- determine a variable indicative of an estimate of the level of traffic on the lanes affected by said request according to said departure time information and said information indicative of a journey;
- compare the variable indicative of an estimate of the level of traffic against a threshold value; and
- deliver to the automotive vehicle associated with the identification information an access certificate when the variable indicative of an estimate of the level of traffic is below said threshold value;
each access control device (60) being configured to determine whether an automotive vehicle is associated with an access certificate and to authorize access by said automotive vehicle when it is associated with an access certificate.

3. The transport system as claimed claim 1 or 2, further comprising a traveler movements management device (58) configured to:
- receive a request from a traveler comprising time information, information indicative of a journey from a departure public transport shuttle station to an arrival public transport shuttle station;
- in response to said request, deliver to the traveler personal information relating to a departure time of a public transport shuttle and personal information relating to a position of said public transport shuttle on the platform of the departure public transport shuttle station.

4. The transport system as claimed in claim 3, in which the traveler movements management device (58) is further configured to determine a journey of a public transport shuttle according to a plurality of traveler requests received in such a way as to optimize the filling of said public transport shuttle.

5. The transport system as claimed in any one of claims 1 to 4, in which the access control device (60) comprises additional means for dynamic control of the vehicle entering via one of the entry lanes, which means are configured to:
- determine at least one characteristic indicative of the dynamic behavior of an entering vehicle, chosen from the quality of the courses followed, the speed with respect to a setpoint speed, the acceleration and deceleration capabilities of the entering vehicle;
- compare said controlled characteristic indicative of the dynamic behavior of the entering vehicle against a guideline; and
- allow or refuse the automotive vehicle access according to said comparison.

6. The transport system as claimed in any one of claims 1 to 5, in which the platform (30) of at least one of the stations (29) for the public transport shuttles comprises platform-access doors (32), presence detectors (41) able to detect the presence of a public transport shuttle in front of each of the platform-access doors (32) and means (42) for controlling the platform-access doors which are able to trigger the opening of one of the platform-access doors (32) in reponse to detection of a transport shuttle in front of said platform-access door (32).

7. The transport system as claimed in any one of claims 1 to 6, in which entry zones (6), exit zones (7) and/or stations for the public transport shuttles (8, 29) comprise parking zones equipped with a recharging device or with a battery exchange device.

8. The transport system as claimed in any one of claims 1 to 7, in which the high-speed-traffic, service, entry and exit lanes comprise washed-concrete or fiber-reinforced concrete running surfaces.

9. The transport system as claimed in any one of claims 1 to 8, in which the high-speed-traffic, service, entry and exit lanes comprise running surfaces which are separated by a space that allows runoff water and other dirt to be removed.

10. The transport system as claimed in any one of claims 1 to 9, comprising a tunnel having an inside diameter of the order of 7.5 m, through which a first set of two lanes for one of the directions and a second set of two lanes for the other of the directions passes, said second set being arranged above or below the first set; each of the first and second sets of two lanes comprising two high-speed-traffic lanes or one high-speed-traffic lane and one service lane.

11. The transport system as claimed in any one of claims 1 to 10, comprising a tunnel having an inside diameter of the order of 9.5 m, through which a first set of three lanes for one of the directions and a second set of three lanes for the other of the directions passes, said second set being arranged above or below the first set; each of the first and second sets of three lanes comprising three high-speed-traffic lanes or two high-speed-traffic lanes and one service lane.

12. The transport system as claimed in any one of claims 1 to 10, wherein the high-speed-traffice lanes (2, 3, 4, 5, 25, 26, 27, 28) and said service lanes (9, 11, 10, 12, 13, 14, 15, 16) are bounded on each side by uprights (37); said high-speed traffic and service lanes having no upright (37) between the lanes at each place dedicated to a lane change.

13. The transport system as claimed in claim 12, in which the uprights (37) act as guides and in which the onboard sensors (47, 48, 49, 50, 51, 52) are ultrasonic radars positioned at the front, at the rear, and on the sides of the vehicles and able to detect said uprights (37).

14. The transport system as claimed in claim 12 or 13, in which the vehicles are each equipped with a control device which comprises a lane-change module for changing lanes between an original lane and a target lane, said lane-change module being connected to said onboard sensors (47, 48, 49, 50, 51, 52) and being configured to:
- detect a lane-change indicator, consisting of a discontinuity in the upright (37) separating the original lane from the target lane or of an optical indicator; or
- processing information indicative of a lane change and delivered by the traffic management device or stored in a memory of the vehicle;
- detect the position of one or more of the uprights of the target lane; and
- control said vehicle in such a way that it shifts away from the original lane toward the target lane according to the lane-change indicator or the information indicative of a lane change and the position of one of the uprights of the target lane.

15. The transport system as claimed in any one of claims 1 to 14, **characterized in that** at least one of the vehicles comprises at least four wheels each one equipped with an in-built motor and each one able to rotate in order to steer the vehicle.

16. The transport system as claimed in any one of claims 1 to 15, in which at least one of the lanes is equipped with an induction charging device able to deliver a magnetic field and in which at least one of the automotive vehicles or one of the public transport shuttles is equipped with a receiver able to convert the magnetic field into an electrical current so as to recharge a battery.

17. The transport system as claimed in claim 3, in which the traveler movements management device (58) is further configured so that preselected public transport shuttles stop at certain stations, to predetermined timetables and for predetermined journeys, so as to pick up the passengers who so wish it, and set down those who wish to leave, according to a scheduled transport.

18. The transport system as claimed in any one of claims 1 to 17, comprising stations (30) built at ground level, requiring no stairs in order to be used by the travelers and comprising service lanes (33) in the form of access ramps (34) to link the high-speed-traffic lanes.

19. The transport system as claimed in any one of claims 1 to 17, comprising only vehicles equipped with a data memory storage system able to store the information needed for operation of said vehicles in said lanes, said vehicles being designed to run autonomously as far as the next exit lane or as far as the next station using said information stored in memory in the memory storage system.

20. The transport system as claimed in any one of claims 1 to 18 considered in combination with claim 6, comprising a recognition system in front of the platform doors in order to detect whether the traveler is indeed one who made a reservation.

21. The transport system as claimed in any one of claims 1 to 20, comprising public transport shuttles equipped with a recognition system in order to detect when the traveler who made a reservation is present in the shuttle and when he has left.
